# EUROPEAN PATENT APPLICATION

(11) **EP 3 852 231 A1**
(43) Date of publication of application: **21.07.2021**
(21) Application number: 19860660.0
(22) Date of filing: 10.09.2019
(51) Int. Cl.: H02J 9/06

(54) **POWER SUPPLY SYSTEM**

(30) Priority: 13.09.2018 KR 20180109536; 13.09.2018 KR 20180109811
(71) Applicant: LS Electric Co., Ltd., Gyeonggi-do 14119 (KR)
(72) Inventor: PARK, Minjun, Anyang-si, Gyeonggi-do 14118 (KR); YUN, Dongjin, Anyang-si, Gyeonggi-do 14118 (KR); KIM, Jihong, Anyang-si, Gyeonggi-do 14118 (KR); KIM, Dohyun, Anyang-si, Gyeonggi-do 14118 (KR); HWANG, Kwangkyu, Anyang-si, Gyeonggi-do 14118 (KR)
(74) Representative: K&L Gates LLP
(86) International application number: PCT/KR2019/011670
(87) International publication number: WO 2020/055080

(57) **Abstract**

The present specification relates to a power supply system capable of supplying uninterruptible power, the system comprising a plurality of circuit breakers for controlling the connections between a plurality of power source modules, to control power demand and supply through opening or closing of the circuit breakers according to various situations occurring in the system, so as to enable a UPS function between the plurality of power source modules.

## Description

### BACKGROUND

### 1. Technical Field

The present disclosure relates to a power supply system capable of supplying uninterruptible power.

### 2. Description of the Related Art

The technology behind the present disclosure relates to a system comprising a plurality of power supply devices.

A system in which a plurality of power supply devices supply power to each load may be connected in common through a DC bus line. When connected to a common bus line as described above, there is an advantage capable of receiving and supplying power from and to an adjacent power device through the DC bus line. However, when the system is configured in this way, there are limitations such as system stability problem, difficulty in controlling power reception and supply, and a lack of countermeasures in case of an accident.

Since a large number of power devices having a complex configuration are provided, system operation cannot be stably carried out when compatibility between devices is poor. Furthermore, when a load to which each device supplies power is a critical load that needs power supply at all times, it may be required to provide a separate UPS device for an abnormal condition, but when a UPS device is provided, the configuration of the system becomes more complicated, and the provision of the UPS device itself may not be easy due to structural/design constraints. In addition, as the configuration becomes more complicated, the control of each device and system may be inevitably more complex, and the risk of occurrence of failures and accidents may increase. As a result, it may be difficult to supply stable and reliable power, so the operation of the load may be also unstable, and an appropriate operational response to the occurrence of various accidents cannot be made.

### SUMMARY

An aspect of the present disclosure is to improve the limitations of the related art as described above.

In other words, the present specification aims to provide a power supply system capable of improving the limitations of the related art.

Specifically, it is intended to provide a power supply system in which power reception and supply are carried out between a plurality of power modules provided in the system, thereby allowing the plurality of power modules to respectively perform a UPS function with each other.

Furthermore, it is intended to provide a power supply system capable of effectively maintaining power supply to a load in various abnormal situations.

In addition, it is intended to provide a power supply system capable of stably and adequately coping with power reception and supply according to various abnormal situations.

In order to solve the foregoing problems, a power supply system according to the present disclosure may include circuit breakers controlling a connection on a power bus to which a plurality of power modules are connected, thereby opening and closing the circuit breakers according to various situations occurring in the system to control power reception and supply.

In other words, as a technical feature, a power supply system according to the present disclosure may include circuit breakers corresponding to a plurality of power modules to control the circuit breakers to receive and supply power through the power bus, thereby performing a UPS function between the plurality of power modules.

The above technical features may be applied and implemented to a power supply system, and the present specification may provide embodiments of a power supply system having the above technical features.

In addition, a power supply system having the above technical features as a problem solving means according to an embodiment of the present disclosure may include a plurality of power panels that convert power supplied from at least one power source into DC power, and convert the converted DC power into driving power of a load, and supply the driving power to the load, a supply panel that converts power supplied from at least one power supply source into DC power to supply the converted DC power to the plurality of power panels when connected to the plurality of power panels, and a plurality of circuit breakers disposed between a power end of each of the plurality of power panels and the supply panel, wherein the plurality of circuit breakers are opened and closed differently according to the power supply state of at least one of the plurality of power panels and the supply panel to connect or disconnect the DC power between the plurality of power panels and the supply panel.

In one embodiment, the at least one power supply source may include a first AC power source and a second AC power source that supply AC power, and a battery power source in which DC power is stored to supply the stored power to the plurality of power panels while the power supply is switched and restored when the power supply of the first AC power source and the second AC power source is interrupted.

In one embodiment, after the power supply is interrupted, the battery power source may supply the stored power to the plurality of power panels with no interruption until the power supply is switched and restored.

In one embodiment, the at least one power supply source may further include an emergency power source that supplies emergency power to the load when the power supply of the first AC power source, the second AC power source, and the battery power source is interrupted.

In one embodiment, each of the plurality of power panels may include at least one first power conversion device that converts power supplied from the at least one power supply source into the DC power, and a second power conversion device that converts the DC power supplied from the at least one first power conversion device into the driving power to supply the driving power to the load.

In one embodiment, the plurality of power panels may supply the DC power to the second power conversion device through any one of the at least one first power conversion device according to the state of the at least one power supply source.

In one embodiment, when the power supply of a conversion device that supplies the DC power to the second power conversion device is interrupted, the plurality of power panels may supply the DC power to the second power conversion device through a conversion device other than the conversion device.

In one embodiment, the at least one first power conversion device may supply the DC power to the second power conversion device through a conversion device that receives power from the battery power source while the conversion device is switched to the other conversion device.

In one embodiment, a power supply source that supplies power to the supply panel may include at least the battery power source.

In one embodiment, the supply panel may include at least one first power conversion device that further receives power from the first AC power source and the second AC power source, and converts power received from each of the first AC power source and the second AC power source, and the battery power source into the DC power.

In one embodiment, the supply panel may further include a second power conversion device that converts the DC power received from the at least one first power conversion device into driving power to be supplied to a load connected to the supply panel so as to supply the driving power to the connected load.

In one embodiment, the plurality of circuit breakers may be closed when the DC power is connected between the plurality of power panels and the supply panel, and opened when the DC power is disconnected between the plurality of power panels.

In one embodiment, in the plurality of circuit breakers, when the power supply of at least one of the plurality of power panels is interrupted, a circuit breaker connected to a power end of the power panel in which the power supply is interrupted may be closed to connect the interrupted power panel and the supply panel so as to supply the DC power from the supply panel to the interrupted power panel.

In one embodiment, a case where the power supply is interrupted may be when the state of at least one of the at least one power supply source that supplies power to the plurality of power panels, the DC power of the plurality of power panels, the driving power, the at least one first power conversion device, and the load is changed to cause an abnormality in the supply of the driving power to the load.

In one embodiment, a case where the power supply is interrupted may be at least one of when the power supply of the first AC power source and the second AC power source is interrupted, when the operation of at least one first power conversion device supplied with power from the first AC power source and the second AC power source is interrupted, when the DC power is changed from its initial state, when the driving power is changed from its initial state, and when the driving state of the load is changed.

In one embodiment, the interrupted power panel may be supplied with the DC power from a conversion device connected to the battery power source until the power supply is interrupted, and the DC power conducted from the supply panel is supplied.

In one embodiment, a plurality of supply panels may be provided therein, and a supply target power panel for supplying the DC power may be predetermined for each of the plurality of supply panels among the plurality of power panels to supply the DC power to the predetermined supply target power panel.

In one embodiment, the supply panel may be provided at a position where each of the plurality of power panels is separated within a predetermined distance.

In addition, a power supply system having the above technical features as a problem solving means according to another embodiment of the present disclosure may include a plurality of power panels that convert power supplied from each of at least one power supply source into DC power, and convert the DC power into driving power for driving a load to supply the driving power to the load, a supply panel connected in common to each of the plurality of power panels to convert power supplied from at least one of the at least one power supply source into the DC power so as to supply the DC power to the plurality of power panels according to the state of the plurality of power panels, a plurality of circuit breakers that control connection between each of the plurality of power panels and the supply panel, and a control device that controls the opening and closing of the plurality of circuit breakers according to the state of each of the plurality of power panels to control the reception and supply of the DC power of each of the plurality of power panels.

In one embodiment, the supply panel may convert power supplied from each of the at least one power supply source into the DC power.

In one embodiment, the supply panel may convert the DC power into the driving power to supply the driving power to a specific load among the loads.

In one embodiment, when an abnormality occurs in at least one of the plurality of power panels, the control device may close a circuit breaker of the abnormality occurred power panel to allow the abnormality occurred power panel to receive the DC power from the supply panel.

In one embodiment, when an abnormality occurs in the supply panel, the control device may close a circuit breaker of a power panel most adjacent to the abnormality occurred power panel, and control the abnormality occurred power panel to receive the DC power from the adjacent power panel.

In one embodiment, the supply panel may be provided in plural, and a supply target power panel for supplying the DC power may be predetermined for each of the plurality of supply panels among the plurality of power panels to supply the DC power to the predetermined supply target power panel.

In one embodiment, for the supply target power panel, the plurality of power panels may be divided into a plurality of groups, and predetermined for each of the plurality of supply panels for each of the divided groups, and each of the plurality of supply panels may supply the DC power to the supply target power panels corresponding to the divided groups.

In one embodiment, the supply panel may be provided at a position where each of the plurality of power panels is separated within a predetermined distance.

On the other hand, in order to solve the foregoing problems, a power supply system according to the present disclosure may include circuit breakers controlling each of electric circuits to which a plurality of power modules are connected, thereby opening and closing the circuit breakers according to various situations occurring in the system to control power reception and supply.

In other words, as a technical feature, a power supply system according to the present disclosure may include circuit breakers corresponding to a plurality of power modules to control the circuit breakers so as to receive and supply power, thereby performing a UPS function between the plurality of power modules.

The above technical features may be applied and implemented to a power supply system, and the present specification may provide embodiments of a power supply system having the above technical features.

A power supply system having the above technical features as a problem solving means according to an embodiment of the present disclosure may include a plurality of power panels that convert power supplied from at least one power supply source into DC power, and convert the DC power into driving power of a load, and supply the driving power to the load, and a plurality of circuit breakers disposed at one side of each of the plurality of power panels to connect or disconnect power ends of two power panels between one side of each of the plurality of power panels and the other side of a power panel adjacent to the one side, wherein in the plurality of circuit breakers, when power supply in at least one of the plurality of power panels is interrupted, at least one of circuit breakers connected to one side and the other side of a power panel in which the power supply is interrupted is closed to connect at least one of power ends of power panels connected to both sides of the interrupted power panel and a power end of the interrupted power panel.

In one embodiment, the at least one power supply source may include a first AC power source and a second AC power source that supply AC power, and a battery power source in which DC power is stored to supply the stored power to the plurality of power panels while the power supply is switched and restored when the power supply of the first AC power source and the second AC power source is interrupted.

In one embodiment, after the power supply is interrupted, the battery power source may supply the stored power to the plurality of power panels with no interruption until the power supply is switched and restored.

In one embodiment, the at least one power supply source may further include an emergency power source that supplies emergency power to the load when the power supply of the first AC power source, the second AC power source, and the battery power source is interrupted.

In one embodiment, each of the plurality of power panels may include at least one first power conversion device that converts power supplied from the at least one power supply source into the DC power, and a second power conversion device that converts the DC power supplied from the at least one first power conversion device into the driving power to supply the driving power to the load.

In one embodiment, the plurality of power panels may supply the DC power to the second power conversion device through any one of the at least one first power conversion device according to the state of the at least one power source.

In one embodiment, when the power supply of the conversion device that supplies the DC power to the second power conversion device is interrupted, the plurality of power panels may supply the DC power to the second power conversion device through a conversion device other than the conversion device.

In one embodiment, while the conversion device is switched to the other conversion device, the at least one first power conversion device may supply the DC power to the second power conversion device through a conversion device receiving power from the battery power source.

In one embodiment, each of the plurality of power panels may be connected to any two of the plurality of circuit breakers.

In one embodiment, in the plurality of power panels, the plurality of circuit breakers may be respectively disposed between power ends of two power panels adjacent to a power end of any one power panel.

In one embodiment, each of the plurality of power panels may include a first power end corresponding to one end of the power end and a second power end corresponding to the other end of the power end, and the plurality of circuit breakers may be disposed between each of the two power panels to connect or disconnect a first power end of a power panel at one side and a second power end of a power panel at the other side.

In one embodiment, the plurality of circuit breakers may be provided with a number corresponding to the plurality of power panels.

In one embodiment, the plurality of circuit breakers may be closed when the DC power is connected between the plurality of power panels, and opened when the DC power is disconnected between the plurality of power panels.

In one embodiment, in the plurality of circuit breakers, when the power supply of at least one of the plurality of power panels is interrupted, a circuit breaker disposed between the power panel in which the power supply is interrupted and a power panel adjacent to the interrupted power panel may be closed to connect the interrupted power panel and the adjacent power panel, thereby supplying the DC power from the adjacent power panel to the interrupted power panel.

In one embodiment, the interrupted power panel may be supplied with the DC power from a conversion device connected to the battery power source until the power supply is interrupted, and the DC power conducted from the adjacent power panel is supplied.

In one embodiment, the power supply system may further include a control device that monitors the state of at least one of the plurality of power panels and the plurality of circuit breakers to control at least one of the plurality of power panels and the plurality of circuit breakers.

In addition, a power supply system having the above technical features as a problem solving means according to another embodiment of the present disclosure may include a plurality of loads, a plurality of power panels that convert power supplied from each of a plurality of power supply sources into DC power, and convert the DC power into driving power for driving the plurality of loads to supply the driving power to the plurality of loads, a bus line connected in common to an output end through which the DC power flows from each of the plurality of power panels so as to transfer the DC power output from each of the plurality of power panels, a plurality of circuit breakers provided on each of electric circuits to which an output end between two adjacent power panels is connected among the plurality of power panels on the bus line to control connection between the plurality of power panels, and a control device that controls the opening and closing of the plurality of circuit breakers according to the state of each of the plurality of power panels to control the reception and supply of the DC power between the plurality of power panels through the bus line.

In one embodiment, when an abnormality occurs in at least one of the plurality of power panels, the control device may close a circuit breaker on any one of electric circuits connected to the abnormality occurred power panel and a power panel adjacent to the abnormality occurred power panel to allow the abnormality occurred power panel to receive the DC power from the adjacent power panel.

The embodiments of the power supply system according to the present disclosure as described above may be applied and implemented to a power module that supplies and uses DC power, a power supply system, and a method of operating the power supply system. In particular, it may be usefully applied and implemented to a DC UPS module and a power supply system having the same. However, the technology disclosed in this specification may not be limited thereto, and may be applied and implemented to all power devices, power supply devices, power control devices, power supply systems, power systems, power control systems, plant systems, plant control systems, plant control methods, energy storage systems, control methods or operation methods of the energy storage systems, and motor control panels that control a plurality of motor loads, motor control systems, motor operation systems, and the like.

A power supply system according to the present disclosure may control a circuit breaker of each of a plurality of power modules connected to a power bus to control the reception and supply of power through the power bus, thereby having an effect capable of performing a UPS function between the plurality of power modules.

Furthermore, a power supply system according to the present disclosure may control a circuit breaker of each of a plurality of power modules connected to each other to control the reception and supply of power, thereby having an effect capable of performing a UPS function between the plurality of power modules.

Accordingly, even when various abnormal situations occur on the system, there is an effect capable of maintaining power supply to a load with no interruption.

In other words, the power supply system according to the present disclosure may have an effect capable of achieving an appropriate and stable power supply response to various abnormal situations occurring on the system.

In addition, a power supply system according to the present disclosure may control a circuit breaker of each of the plurality of power modules connected to a power bus to control the reception and supply of power through the power bus or control a circuit breaker of each of the plurality of power modules connected to each other according to an occurrence situation to control the reception and supply of power, thereby having an effect capable of achieving efficient operation with a minimal means.

Moreover, the power supply system according to the present disclosure may have an effect capable of increasing the stability, reliability, and usefulness of large-capacity system operation.

As a result, the power supply system according to the present disclosure may solve the foregoing problems, thereby having an effect capable of improving the limitations of the related art.

### BRIEF DESCRIPTION OF THE DRAWINGS

FIG. 1 is a block diagram showing a configuration of a power supply system according to an embodiment of the present disclosure.
FIG. 2 is a block diagram showing a configuration of a power panel of a power supply system according to an embodiment of the present disclosure.
FIG. 3 is a block diagram showing a specific structural configuration of a power panel of a power supply system according to an embodiment of the present disclosure.
FIG. 4 is a conceptual view showing a connection structure of a power panel of a power supply system according to an embodiment of the present disclosure.
FIGS. 5A and 5B are exemplary views showing a specific connection structure of a power supply system according to an embodiment of the present disclosure.
FIG. 6 is an exemplary view 1 showing a specific example of a power supply system according to an embodiment of the present disclosure.
FIG. 7 is an exemplary view 2 showing a specific example of a power supply system according to an embodiment of the present disclosure.
FIG. 8 is an exemplary view 3 showing a specific example of a power supply system according to an embodiment of the present disclosure.
FIG. 9 is an exemplary view 4 showing a specific example of a power supply system according to an embodiment of the present disclosure.
FIG. 10 is a block diagram showing a configuration of a power supply system according to another embodiment of the present disclosure.
FIG. 11 is a block diagram showing a configuration of a power panel of a power supply system according to another embodiment of the present disclosure.
FIG. 12 is a block diagram showing a specific structural configuration of a power panel of a power supply system according to another embodiment of the present disclosure.
FIG. 13 is an exemplary view 1 showing a specific example of a power supply system according to another embodiment of the present disclosure.
FIG. 14 is an exemplary view 2 showing a specific example of a power supply system according to another embodiment of the present disclosure.
FIG. 15 is an exemplary view 3 showing a specific example of a power supply system according to another embodiment of the present disclosure.
FIG. 16 is an exemplary view 4 showing a specific example of a power supply system according to another embodiment of the present disclosure.

### DETAILED DESCRIPTION OF THE EMBODIMENTS

It should be noted that technological terms used herein are merely used to describe a specific embodiment, but not to limit the concept of the technology disclosed in the present specification. Also, unless particularly defined otherwise, technological terms used herein should be construed as a meaning that is generally understood by those having ordinary skill in the field to which the technology disclosed in the present specification belongs, and should not be construed too broadly or too narrowly. Furthermore, if technological terms used herein are wrong terms that are unable to correctly express the concept of the technology disclosed in the present specification, then they should be replaced by technical terms that are properly understood by those skilled in the art. In addition, general terms used in the present specification should be construed based on the definition of dictionary, or the context, and should not be construed too broadly or too narrowly.

In addition, the singular expression used in the present specification includes a plurality of expressions unless the context clearly indicates otherwise. In the present specification, the terms "comprising" and "including" should not be construed to necessarily include all of the elements or steps disclosed herein, and should be construed not to include some of the elements or steps thereof, or should be construed to further include additional elements or steps.

Hereinafter, the embodiments disclosed herein will be described in detail with reference to the accompanying drawings, and the same or similar elements are designated with the same numeral references regardless of the numerals in the drawings and their redundant description will be omitted.

In describing the technology disclosed herein, moreover, the detailed description will be omitted when specific description for publicly known technologies to which the invention pertains is judged to obscure the gist of the technology disclosed in the present specification. Also, it should be noted that the accompanying drawings are merely illustrated to easily explain the concept of the technology disclosed in the present specification, and therefore, they should not be construed to limit the concept of the technology by the accompanying drawings.

Hereinafter, an embodiment of a power supply system according to the present disclosure will be described.

The power supply system may be implemented in a combined or separate form of embodiments to be described below.

The power supply system may be a power supply system including a plurality of power modules.

The power supply system may include a plurality of packaged power devices to supply power.

Here, the power device may be a power supply device or a power panel in which a plurality of power control devices are packaged.

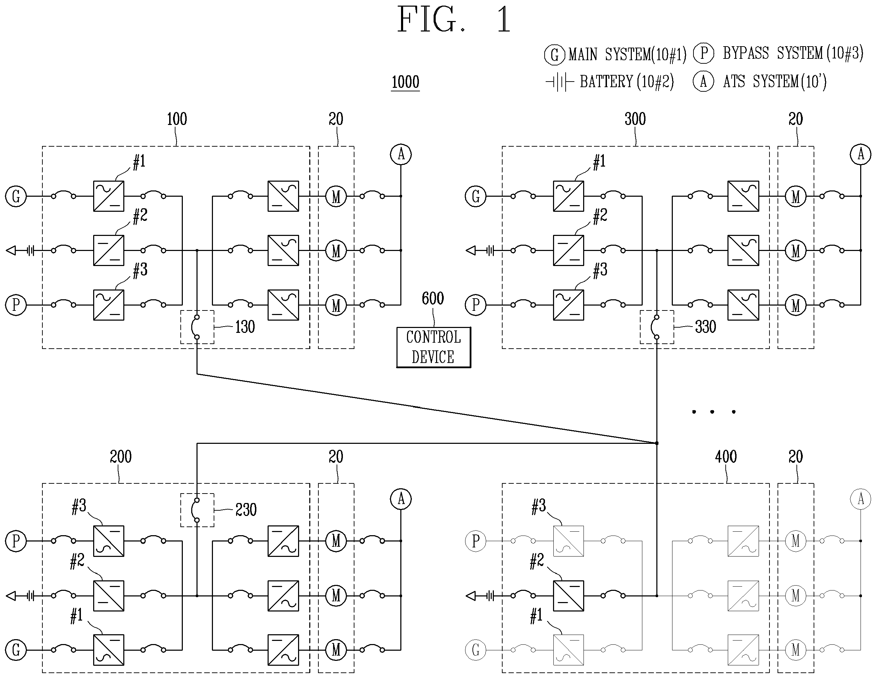

The power supply system 1000 (hereinafter, referred to as a system), as illustrated in FIG. 1, includes a plurality of power panels 100, 200 and 300 that convert power supplied from at least one power supply source 10 into DC power, and convert the DC power into driving power of a load 20 to supply the driving power to the load 20, a supply panel 400 that converts power supplied from at least one power supply source 10 into DC power, and supplies the converted DC power to the plurality of power panels 100, 200 and 300 when connected to the plurality of power panels 100, 200 and 300, and a plurality of circuit breakers 130, 230 and 330 disposed between a power end of each of the plurality of power panels 100, 200 and 300 and the supply panel 400.

Here, the plurality of power panels 100, 200 and 300 convert the DC power into driving power of the load 20 to supply the driving power to the load 20, and the supply panel 400 supplies the DC power to the plurality of power panels 100, 200 and 300 when connected to the plurality of power panels 100, 200 and 300.

In the system 1000 as described above, the plurality of circuit breakers 130, 230 and 330 are opened and closed differently according to the power supply state of at least one of the plurality of power panels 100, 200 and 300 and the supply panel 400 to connect or disconnect the DC power between the plurality of power panels 100, 200 and 300 and the supply panel 400.

In other words, as illustrated in FIG. 1, the system 1000 includes a plurality of power panels 100, 200 and 300 that convert power supplied from at least one power supply source 10 into DC power, and convert the DC power into driving power of a load 20 to supply the power to the load, a supply panel 400 connected in common to an power end of each of the plurality of power panels 100, 200 and 300 to convert power supplied from the at least one power supply source 10 into the DC power so as to supply the DC power to the plurality of power panels 100, 200 and 300 when connected to the plurality of power panels 100, 200 and 300, and a plurality of circuit breakers 130, 230 and 330 that control connection between the power end of each of the plurality of power panels 100, 200 and 300and the supply panel 400, and the plurality of circuit breakers 130, 230 and 330 are opened and closed differently according to the power supply state of at least one of the plurality of power panels 100, 200 and 300 and the supply panel 400, thereby connecting or disconnecting the DC power between the plurality of power panels 100, 200 and 300 and the supply panel 400

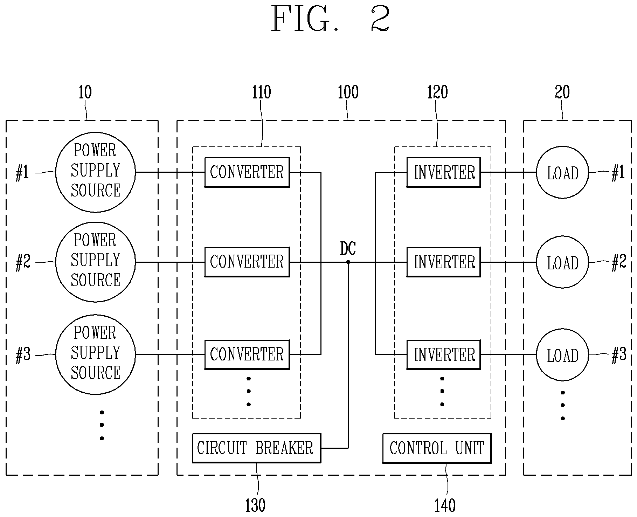

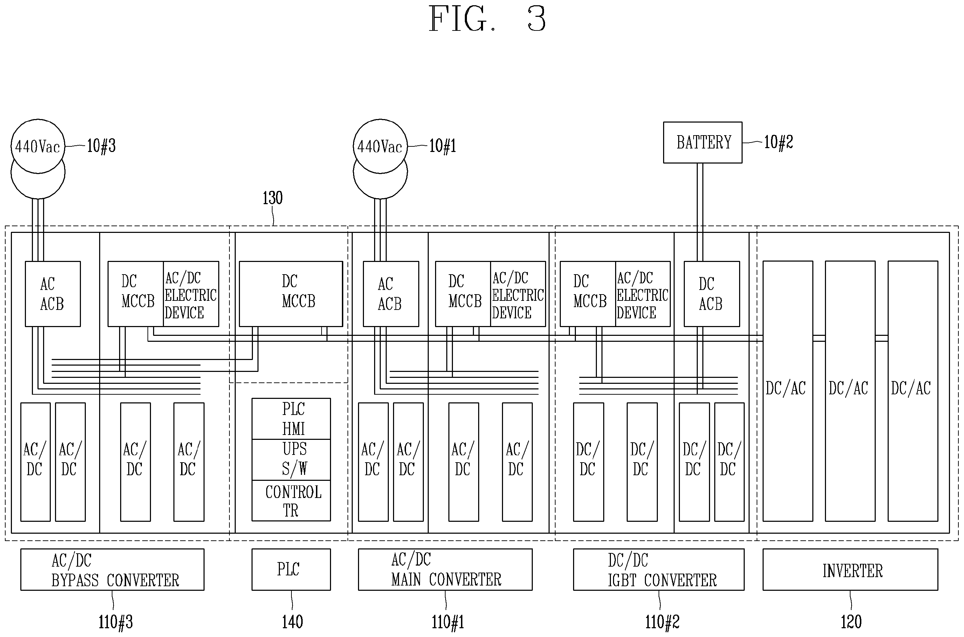

Here, each of the plurality of power panels 100, 200, 300 and 400 may be a power supply device 100 as illustrated in FIGS. 2 and 3.

In other words, the power panel may be configured as a power supply device as illustrated in FIGS. 2 and 3, and the system 1000 may include a plurality of power panels in the form of the power supply device 100 as illustrated in FIGS. 2 and 3, thereby including the plurality of power panels 100, 200 and 300.

The power panels 100 may be a module including a plurality of power control devices.

The power panel may be a power device in which the plurality of power control devices are packaged.

For instance, the plurality of power panels 100, 200, 300, 400 may be a power panel in which the plurality of power control devices are packaged.

The power panel 100 may be a package-type power panel provided in a building requiring high power such as a power plant, a plant, a factory, and an apartment to supply power.

The power panel 100 may also be a package-type power panel configured in any one space.

The power panel 100 may be packaged with the plurality of power control devices to supply power to a load.

The power panel 100, as illustrated in FIG. 2, may include at least one first power conversion device 110 that converts power supplied from each of the at least one power supply source 10 into DC power, at least one second power conversion device 120 that converts the DC power into the driving power for driving the load 20 to supply the driving power to the load 20, and a control unit 140 that controls the reception and supply of the DC power according to the state of the DC power or the driving power.

As such, the plurality of power panels 100, 200, 300 and 400 include the first power conversion device 110, the second power conversion device 120, and the control unit 140 to convert power supplied from the at least one power supply source 10 into the driving power and supply the driving power to the load 20.

A specific configuration of the power panel 100 including the first power conversion device 110, the second power conversion device 120, and the control unit 140 is illustrated as in FIGS. 2 and 3.

The at least one power supply source 10 that supplies power to the power panel 100 may be externally connected to the at least one first power conversion device 110 to supply power to each of the at least one first power conversion device 110.

Each of the at least one power supply source 10 may be connected to each of the at least one first power conversion device 110 to supply DC or AC power to each of the at least one first power conversion device 110.

The at least one power supply source 10 may include a first AC power source 10#1 and a second AC power source 10#3 that supply AC power, and a battery power source 10#2 that stores DC power, as illustrated in FIGS. 2 and 3.

Here, the first AC power source 10#1 may be a main system power source (G) that supplies AC power, the second AC power source 10#3 may be a bypass system power source (P) that supplies AC power, and the battery power source 10#2 may be a battery power source (B) that supplies DC power.

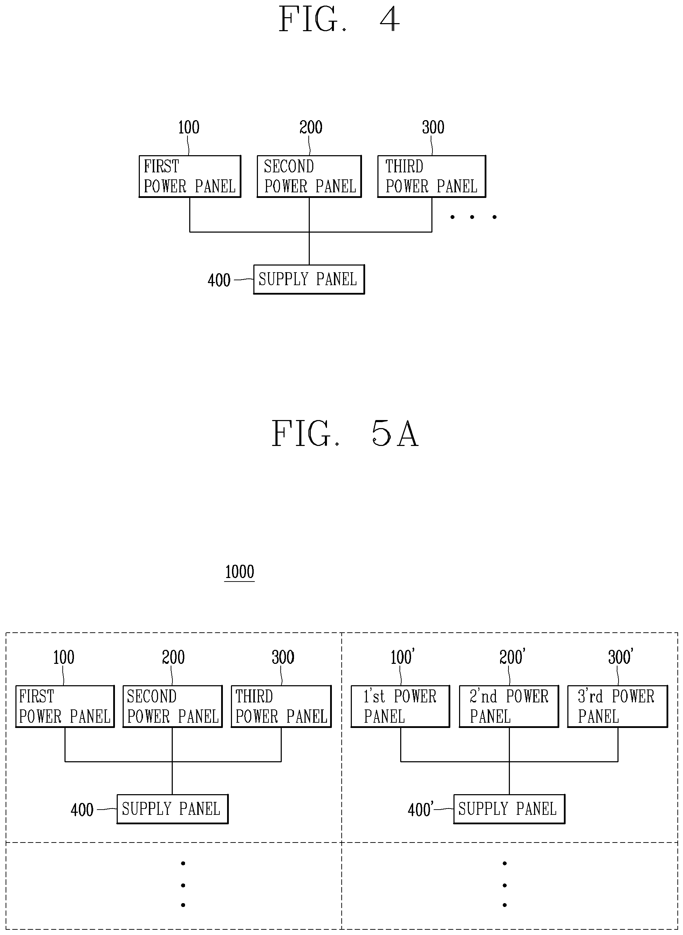

In other words, the at least one power supply source 10 may include a system power source (G), a bypass power source (P), and a battery power source (B), as illustrated in FIG. 4.

Accordingly, each of the plurality of power panels 100, 200 and 300 may be supplied with power from each of the system power source (G), the bypass power source (P), and the battery power source (B).

The first AC power source 10#1 may be a system power source (G).

The first AC power source 10#1 may be a system power source (G) that supplies AC power of 440 [V].

The second AC power source 10#3 may be a bypass power source (P).

The second AC power source 10#3 may be a bypass power source (P) that supplies 440 [V] of AC power.

The battery power source 10#2 may be an emergency battery source that stores DC power and supplies the stored DC power in an emergency.

The battery power source 10#2 may supply stored DC power to the power panel 100 when an abnormality occurs in the first AC power source and the second AC power source.

The DC power may be stored in the battery power source (B), and when the power supply of the first AC power source 10#1 and the second AC power source 10#3 is interrupted, power stored in the battery power source (B) may be supplied to the plurality of power panels 100, 200 and 300 while the power supply is switched and restored.

After the power supply is interrupted, the battery power source (B) may supply the stored power to the plurality of power panels 100, 200 and 300 with no interruption until the power supply is switched and restored.

The at least one power supply source 10 may also further include an emergency power source (A) that supplies emergency generation power to the load 20 when the power supply of the first AC power source (G), the second AC power source (P), and the battery power source (B) is interrupted.

When an abnormality occurs in the first AC power source (G), the second AC power source (P) and the battery power source (B), emergency generation power may be supplied to the load 20.

When an abnormality occurs in all of the first AC power source (G), the second AC power source (P), and the battery power source (B) that supply power to each of the plurality of power panels 100, 200 and 300 so as not to supply power, the emergency power source (A) may be a power source that supplies emergency power to each of the loads 20 to maintain the driving of the load 20 for a predetermined period of time.

For instance, the emergency power source (A) may be a power source including an emergency generator.

Each of the plurality of power panels 100, 200 and 300 may be preferably supplied with power from three power supply sources 10, which are the system power source (G), the bypass power source (P) and the battery power source (B) as illustrated in FIG. 4, and supplied with power only when the system power source (G), the bypass power source (P), and the battery power source (B) are unable to supply power from the emergency power source (A).

Here, each of the at least one power supply source 10 that supplies power to each of the plurality of power panels 100, 200 and 300 may supply power to each of the plurality of power panels 100, 200 and 300 in one system or supply power to each of the plurality of power panels 100, 200 and 300 through a separate distribution panel or from each separate distribution panel.

Each of the plurality of power panels 100, 200 and 300 may include the at least one first power conversion device 110, 210 and 310 that converts power supplied from the at least one power supply source 10 into the DC power, and the second power conversion device 120, 220 and 320 that converts the DC power supplied from the at least one first power conversion device 110, 210 and 310 into the driving power and supply the driving power to the load 20.

Here, the at least one first power conversion device 110, 210 and 310 and second power conversion device 120, 220 and 320 may be provided in plural.

Each of the plurality of power panels 100, 200 and 300 may supply the DC power to at least one second power conversion device 120, 220 and 320 through one of the at least one first power conversion device 110, 210 and 310 according to the state of the at least one power supply source 10.

The first power conversion device 110, 210 and 310, which is a device that converts supplied power into DC power, and may be a converter, for instance.

The first power conversion device 110, 210 and 310 may be an AC/DC converter that converts AC power into DC power, or a DC/DC converter that converts DC power into DC power.

The at least one first power conversion device 110, 210 and 310 may include at least one of an AC/DC converter that converts AC power into DC power and a DC/DC converter that converts a level of DC power.

The at least one first power conversion device 110, 210 and 310 may include three conversion devices 110#1 to #3, 210#1 to #3 and 310#1 to #3 corresponding to the at least one power supply source 10, respectively.

The at least one first power conversion device 110, 210 and 310 may include first to third conversion devices 110#1 to #3, 210#1 to #3 and 310#1 to #3 connected to the first AC power source 10#1, the battery power source 10#2, and the second AC power source 10#3, respectively, to receive power from the power supply sources connected thereto.

According to this, the first AC power source 10#1 is connected to the first conversion device 110#1, 210#1 and 310#1 to supply AC power to the first conversion device 110#1, 210#1 and 310#1, and the battery power source 10#2 is connected to the second conversion device 110#2, 210#2 and 310#2 to supply DC power to the second conversion device 110#2, 210#2 and 310#2, and the second AC power source 10#3 is connected to the third conversion device 110#3, 210#3 and 310#3 to supply AC power to the third conversion device 110#3, 210#3 and 310#3.

The first conversion device 110#1, 210#1 and 310#1 may be an AC/DC converter that converts AC power into DC power, and the second conversion device 110#2, 210# 2 and 310#2 may be a DC/DC converter that converts a level of DC power, and the third conversion device 110#3, 210#3 and 310#3 may be an AC/DC converter that converts AC power into DC power.

Each of the at least one first power conversion device 110, 210 and 310 may include an opening and closing element for opening and closing a connection at front and rear ends thereof, respectively.

The opening and closing element may be a switch provided at each of input and output ends of each of the at least one first power conversion device 110, 210 and 310 to control power that is input and output from and to the at least one first power conversion device 110, 210 and 310.

Here, the opening and closing element provided at the input end may be a circuit breaker that senses an overcurrent to cut off a circuit.

More specifically, an AC air circuit breaker (ACB) may be provided at an input end of the first conversion device 110#1, 210#1 and 310#1 and the third conversion device110#3, 210#3 and 310#3 that receives AC power from the first AC power source 10#1 and the second AC power source 10#3, and a DC molded circuit breaker (MCCB) may be provided at an input end of the second conversion device 110#2, 210#2 and 310#2 that receives DC power from the battery power source 10#2.

The opening and closing element may open and close the connection of the at least one first power conversion device 110, 210 and 310 according to the operation of the at least one first power conversion device 110, 210 and 310.

For instance, when power is not supplied from the at least one power supply source 10, the opening and closing element provided at each of the input end and the output end is opened to separate the connection of the relevant conversion device.

In the at least one first power conversion device 110, 210 and 310, the output ends may be connected to one power end.

In other words, in the at least one first power conversion device 110, 210 and 310, the output ends may be connected in common to the power end, and the DC power converted by the at least one first power conversion device 110, 210 and 310 may flow therethrough.

Accordingly, the power end may be an electric circuit to which the output ends of the at least one first power conversion device 110, 210 and 310 are connected in common to allow the DC power output from the at least one first power conversion device 110, 210 and 310 to flow therethrough.

The power end may be connected to the input ends of the DC electric circuit and each of the second power conversion devices 120, 220 and 320 to transfer the DC power to the DC electric circuit or the second power conversion devices 120, 220 and 320.

The DC power converted and output from the at least one first power conversion device 110, 210 and 310 may be transferred to the second power conversion device 120, 220 and 320.

In the at least one first power conversion device 110, 210 and 310, any one of the first to third conversion devices 110#1 to 110#3, 210#1 to 210#3 and 310#1 to 310#3 may be operated to supply the DC power to the second power conversion device 120, 220 and 320.

When the power supply of the conversion devices 110#1 to #3, 210#1 to #3 and 310#1 to #3 that supply the DC power to the second power conversion device 120, 220 and 320 is interrupted, the plurality of power panels 100, 200 and 300 may supply the DC power to the second power conversion device 120, 220 and 320 through a conversion device other than the conversion devices 110#1 to #3, 210#1 to #3 and 310#1 to #3.

When the power supply of the conversion device 110#1 to #3, 210#1 to #3 and 310#1 to #3 that supplies the DC power to the second power conversion device 120, 220 and 320 is interrupted, the at least one first power conversion device 110, 210 and 310 may supply the DC power to the second power conversion device 120, 220 and 320 through the conversion device 110#2, 210#2 and 310#2 that receives power from the battery power source 10#2 while the conversion device 110#1 to #3, 210#1 to #3 and 310#1 to #3 is switched to the other conversion device.

Here, a case where the power supply of the conversion devices 110#1 to #3, 210#1 to #3 and 310#1 to #3 is interrupted may be when an abnormal state is detected from at least one of the conversion devices 110#1 to #3, 210#1 to #3 and 310#1 to #3, a supply source connected to the conversion devices 110#1 to #3, 210#1 to #3 and 310#1 to #3, and a rating of the DC power.

For instance, when the rating of the DC power output from the first conversion device 110#1, 210#1 and 310#1 is reduced below a predetermined reference while the first conversion device 110#1, 210#1 and 310#1 connected to the first AC power source 10#1 supplies the DC power to the second power conversion device 120, 220 and 320, the third conversion device 110#3, 210#3 and 310#3, which is a conversion device other than the first conversion device 110#1, 210#1 and 310#1, may supply the DC power to the second power conversion device 120, 220 and 320.

In this case, while the first conversion device 110#1, 210#1 and 310#1 is switched to the third conversion device 110#3, 210#3 and 310#3, the at least one first power conversion device 110, 210 and 310 may supply the DC power to the second power conversion device 120, 220 and 320 through the the second conversion device 110#2, 210#2 and 310#2 connected to the battery power source 10#2.

In other words, when the supply of the DC power to the second power conversion device 120, 220, 320 is interrupted, the second conversion device 110#2, 210#2, 310#2 connected to the battery power source 10#2 may supply the DC power to the second power conversion device 120, 220, 320 until the supply of the DC power is switched and restored.

The second power conversion device 120, 220 and 320 may be configured in plural.

The second power conversion device 120, 220 and 320, which is a device that converts the supplied DC power into the driving power, may be an inverter, for instance.

When the load is a load driven by AC power, the second power conversion device 120, 220 and 320 may be an inverter that converts DC power transferred from the at least one first power conversion device 110, 210 and 310 into AC driving power.

When the load is a load driven by DC power, the second power conversion device 120, 220 and 320 may be an inverter that converts DC power transferred from the at least one first power conversion device 110, 210 and 310 into DC driving power.

The second power conversion device 120, 220 and 320 may be provided in a number corresponding to that of the loads 20.

The load 20 may be configured in plural.

The second power conversion device 120, 220 and 320 may include three or more inverters 120#1 to #3, 220#1 to #3 and 320#1 to #3 to correspond to the loads 20.

Each of the second power conversion devices 120, 220 and 320 may be connected to each of the loads 20 to supply the driving power to the connected load.

Each of the second power conversion devices 120, 220 and 320 may include an opening and closing element for opening and closing a connection at a front end thereof.

The opening and closing element may be a switch provided at an input end of each of the second power conversion devices 120, 220 and 320 to control power that is input to the second power conversion devices 120, 220 and 320.

Here, the opening and closing element provided at the input end may be a circuit breaker that senses an overcurrent to cut off a circuit.

The driving power converted and output by the second power conversion device 120, 220 and 320 may be transferred to each of the loads 20.

Here, the loads 20 may include a motor (M) load.

In each of the plurality of power panels 100, 200 and 300, the power end may be connected to the supply panel 400.

In the plurality of power panels 100, 200 and 300, the plurality of circuit breakers 230, 330 and 330 may respectively be disposed between the power end and the supply panel 400.

The power end of each of the plurality of power panels 100, 200 and 300 is connected to the plurality of circuit breakers 130, 230 and 330, and connected to the supply panel 400 through the plurality of circuit breakers 130, 230 and 330.

The supply panel 400 may be an auxiliary power panel that supplies the DC power to the plurality of power panels 100, 200 and 300 among the power panels included in the system 1000.

The supply panel 400 may be an emergency power panel in which the power ends of each of the plurality of power panels 100, 200 and 300 are connected in common to supply the DC power to the plurality of power panels 100, 200 and 300.

Similar to the plurality of power panels 100, 200 and 300, the supply panel 400 may receive power from at least one of the at least one power supply source 10 to convert the power to the DC power.

The supply panel 400 may be a power panel for supplying auxiliary power in which the power ends are connected in common to convert power supplied from at least one of the at least one power supply source 10 into the DC power so as to supply the DC power to the plurality of power panels 100, 200 and 300 according to the state of the plurality of power panels 100, 200 and 300.

The power supply source 10 that supplies power to the supply panel 400 may include at least the battery power source 10#2.

In other words, the supply panel 400 may receive power from at least the battery power source 10#2.

The supply panel 400 may further receive more power from the first AC power source 10#1 and the second AC power source 10#3.

In other words, similarly to the power panels 100, 200 and 300, the supply panel 400 may receive power from at least one of the system power source (G), the bypass power source (P), and the battery power source (B) that supply power to the plurality of power panels 100, 200 and 300 to convert the power into the DC power.

For instance, the supply panel 400 may receive power from the battery power source (B) and convert the power into the DC power.

The supply panel 400 may include at least one first power conversion device 410 that converts power supplied from the first AC power source 10#1, the second AC power source 10#3, and the battery power source 10#2, respectively, into the DC power.

In other words, the supply panel 400 may receive power from the system power source (G), the bypass power source (P), and the battery power source (B) to convert the power into the DC power through the at least one power conversion device 410, as illustrated in FIG. 1.

Here, in the at least one first power conversion device 410 included in the supply panel 400, one output end from which the DC power is output may be connected to the one power end, and the power end may be connected to each of the plurality of power panels 100, 200 and 300.

In other words, the supply panel 400 may be connected to the plurality of circuit breakers 130, 230 and 330 of each of the plurality of power panels 100, 200 and 300, and connected in common to the plurality of power panels 100, 200 and 300 to control connection to each of the plurality of power panels 100, 200 and 300 through the opening and closing of each of the plurality of circuit breakers 130, 230 and 330.

The supply panel 400 may transfer the DC power output from the at least one first power conversion device 410 to the plurality of circuit breakers 130, 230 and 330.

The supply panel 400 may also further include at least one second power conversion device 420 that converts the DC power supplied from the at least one first power conversion device 410 into driving power to be supplied to the load 20 connected to the supply panel 400 so as to supply the driving power to the load 20 connected to the supply panel 400.

In other words, similar to the plurality of power panels 100, 200 and 300, the supply panel 400 may include the at least one first power conversion device 410 and the second power conversion devices 420 to convert power supplied from the at least one power supply source 10 into the DC power, and convert the DC power into the driving power so as to supply the driving power to the load 20.

The supply panel 400 may convert the DC power into the driving power, and supply the driving power to a specific load connected to the supply panel 400.

For a more specific example of the supply panel 400, the supply panel 400 may include a second conversion device 410#2 that receives power from the battery power source (B) to convert the power supplied from the battery power source (B) into the DC power source, and a second power conversion device 420#2 that converts the DC power output from the second conversion device 410#2 into the driving power, thereby transferring the DC power to each of the plurality of power panels 100, 200 and 300, or supplying the driving power to a specific load designated for power supply by the supply panel 400 among the loads 20.

The supply panel 400 may be connected to the power end of each of the plurality of power panels 100, 200 and 300 through the plurality of circuit breakers 130, 230 and 330.

Each of the plurality of power panels 100, 200 and 300 and the supply panel 400 may receive power from any one of the at least one power supply source 10 to convert the power into the DC power.

In other words, each of the plurality of power panels 100, 200 and 300 and the supply panel 400 may be selectively supplied with power from any one of the at least one power supply source 10.

Each of the plurality of power panels 100, 200 and 300 and the supply panel 400 may receive power from any one of the at least one power supply source 10 according to a preset supply criterion to convert the power into the DC power.

The supply criterion may be a criterion for priority of power supply of the at least one power supply source 10.

Each of the plurality of power panels 100, 200 and 300 may control and monitor the operation of the at least one first power conversion device 110, 210 and 310 and the second power conversion device 120, 220 and 320 included therein.

The plurality of power panels 100, 200 and 300 may select any one of the at least one first power conversion device 110, 210 and 310 according to the state of the at least one power supply source 10 to transfer the DC power to each of the second power conversion devices 120, 220 and 320 through the selected conversion device.

Each of the plurality of power panels 100, 200 and 300 may transfer the DC power to the second power conversion device 120, 220 and 320 through one conversion device selected according to the state of the at least one power supply source 10.

Each of the plurality of power panels 100, 200 and 300 may control the opening and closing of each of the first to third circuit breakers 130, 230 and 330 according to a result of controlling and monitoring the operation of the at least one first power conversion device 110, 210 and 310 and the second power conversion device 120, 220 and 320 included therein.

Furthermore, the supply panel 400 may select any one of the at least one first power conversion device 410 according to the state of the at least one power supply source 10 to transfer the DC power to the second power conversion device 420 through the selected conversion device.

Each of the plurality of power panels 100, 200 and 300 may control and monitor the operation of the at least one first power conversion device 110, 210 and 310 and the second power conversion device 120, 220 and 320 included therein to detect the state of the DC power and the driving power.

When an abnormality occurs in at least one of a conversion device that is transferring the DC power to the at least one first power conversion device 110, 210 and 310 and a power supply source corresponding to the conversion device, the plurality of power panels 100, 200 and 300 may transfer the DC power to the second power conversion device 120, 220 and 320 through a conversion device other than the conversion device.

In other words, when an abnormality occurs in at least one of a conversion device that is transferring the DC power and a power supply source corresponding to the conversion device, each of the plurality of power panels 100, 200 and 300 may switch it to a conversion device other than the conversion device to transfer the DC power to the second power conversion device 120, 220 and 320 through the switched conversion device.

When an abnormality occurs in at least one of a conversion device that is transferring the DC power to the second power conversion device 120, 220 and 320 and a power supply source corresponding to the conversion device, the plurality of power panels 100, 200 and 300 may switch the power supply source that is supplying power and the conversion device to allow a conversion device other than the conversion device to transfer the DC power to the second power conversion device 120, 220 and 320.

The supply panel 400 may control the supply of the DC power to the plurality of power panels 100, 200 and 300 according to a result of controlling and monitoring the operation of the at least one first power conversion device 410.

The supply panel 400 may control and monitor the operation of the at least one first power conversion device 410 to detect the state of the DC power.

When an abnormality occurs in at least one of a conversion device that is transferring the DC power to the plurality of power panels 100, 200 and 300 and a power supply source corresponding to the conversion device, the supply panel 400 may transfer the DC power to the plurality of power panels 100, 200 and 300 through a conversion device other than the conversion device.

In other words, when an abnormality occurs in at least one of a conversion device that is transferring the DC power and a power supply source corresponding to the conversion device, the supply panel 400 may switch it to a conversion device other than the conversion device to transfer the DC power to the plurality of power panels 100, 200 and 300 through the switched conversion device.

When an abnormality occurs in at least one of a conversion device that is transferring the DC power to the plurality of power panels 100, 200 and 300 and a power supply source corresponding to the conversion device, the supply panel 400 may switch the power supply source that is supplying power and the converter to allow a conversion device other than the conversion device to transfer the DC power to the plurality of power panels 100, 200 and 300.

The plurality of circuit breakers 130, 230 and 330 connected to the power end and the supply panel 400 may be DC circuit breakers that cut off DC power.

The plurality of circuit breakers 130, 230 and 330 may be provided between the power end connected to an output end of each of the at least one first power conversion device 110, 210 and 310, and the supply panel 400 connected to the power end.

In other words, the plurality of circuit breakers 130, 230 and 330 may be provided on an electric circuit to which the power end of the plurality of power panels 100, 200 and 300 and the supply panel 400 are connected to control connection between the plurality of power panels 100, 200 and 300 and the supply panel 400.

According to this, the plurality of power panels 100, 200 and 300 may be connected to the supply panel 400 through the power end, and connection to the supply panel may be controlled by the opening and closing of the plurality of circuit breakers 130, 230 and 330.

The plurality of circuit breakers 130, 230 and 330 may be included in each of the plurality of power panels 100, 200 and 300.

The plurality of circuit breakers 130, 230 and 330 may also be provided in the supply panel 400.

The plurality of circuit breakers 130, 230 and 330 may also be configured as a separate configuration separated from the plurality of power panels 100, 200 and 300 and the supply panel 400.

An electric circuit to which the plurality of power panels 100, 200 and 300 and the supply panel 400 are connected may be a DC electric circuit through which DC power flows.

The DC electric circuit, which is an electric circuit to which the plurality of power panels 100, 200 and 300 and the supply panel 400 are connected, may be an electric circuit through which the DC power is transferred between the plurality of power panels 100, 200 and 300 and the supply panel 400.

The DC electric circuit may preferably have a rating of the magnitude of DC power supplied from one conversion device or the magnitude of DC power supplied from two conversion devices.

In other words, the rating of the DC electric circuit may be a rating capable of transferring DC power supplied from the two conversion devices.

In the DC electric circuit, the DC power may flow according to the opening and closing of the plurality of circuit breakers 130, 230 and 330.

The plurality of circuit breakers 130, 230 and 330 provided between the power end and the DC electric circuit to control a connection between the power end and the DC electric circuit may be DC-only molded case circuit breakers (MCCBs).

The plurality of circuit breakers 130, 230 and 330 may be opened and closed differently according to the power supply state of at least one of the plurality of power panels 100, 200 and 300 and the supply panel 400 to connect or disconnect the DC power between the power end and the supply panel 400.

The plurality of circuit breakers 130, 230 and 330 may be opened and closed differently according to the state of at least one of the DC power of the plurality of power panels 100, 200 and 300 and the supply panel 400, the driving power, the at least one first power conversion device 110, 210, 310 and 410, and the load 20 to connect or disconnect the DC power between the power end and the supply end 400.

Here, the at least one state may be at least one of when the DC power is changed from its initial state, when the driving power is changed from its initial state, when the power supply state of the at least one first power conversion device 110, 210, 310 and 410 is changed, and when the driving state of the load 20 is changed.

For instance, the at least one state may include when the DC power or the driving power falls below a reference rating, when a failure/accident occurs in the at least one first power conversion device 110, 210, 310 and 410 to change the power supply state, or when the driving power supplied to the load 20 is reduced to change the driving state of the load 20.

The plurality of circuit breakers 130, 230 and 330 may be opened at normal times and closed during operation to control a connection between the power end and the supply panel 400.

Accordingly, each of the plurality of power panels 100, 200 and 300 may be connected to the supply panel 400 through the opening and closing of each of the plurality of circuit breakers 130, 230 and 330.

The plurality of circuit breakers 130, 230 and 330 may be closed when the DC power is connected between the plurality of power panels 100, 200 and 400 and the supply panel 400, and may be opened when the DC power is disconnected between the plurality of power panels 100, 200 and 400.

When the power supply of at least one of the plurality of power panels 100, 200 and 300 is interrupted, the plurality of circuit breakers 130, 230 and 330 may close a circuit breaker connected to the power end of the power panel in which the power supply is interrupted to connect the interrupted power panel and the supply panel 400, thereby supplying the DC power from the supply panel 400 to the interrupted power panel.

In this case, the interrupted power panel may be supplied with the DC power from a conversion device connected to the battery power source (B) until the power supply is interrupted, and the DC power conducted from the supply panel 400 is supplied.

Here, a case where the power supply is interrupted may be when the state of at least one of the at least one power supply source 10 that supplies power to the plurality of power panels 100, 200 and 300, the DC power of the plurality of power panels 100, 200 and 300, the driving power, the at least one first power conversion device 110, 210, 310 and 410, and the load 20 is changed to cause an abnormality in the supply of the driving power to the load 20.

For instance, a case where the power supply is interrupted may be at least one of when the power supply of the first AC power source 10#1 and the second AC power source 10#3 is interrupted, when the operation of at least one first power conversion device 110, 210, and 310 supplied with power from the first AC power source 10#1 and the second AC power source 10#3 is interrupted, when the DC power is changed from its initial state, when the driving power is changed from its initial state, and when the driving state of the load 20 is changed.

The foregoing system 1000 may further include a control device 600 that monitors the state of at least one of the plurality of power panels 100, 200 and 300, the supply panel 400, and the plurality of circuit breakers 130, 230 and 330 to control at least one of the plurality of power panels 100, 200 and 300, the supply panel 400, and the plurality of circuit breakers 130, 230 and 330 according to the monitoring result.

In other words, the plurality of power panels 100, 200 and 300, the supply panel 400, and the plurality of circuit breakers 130, 230 and 330 may be controlled by the control device 600.

Each of the plurality of power panels 100, 200 and 300, and the supply panel 400 may communicate with the control device 600 to operate according to a result of communication with the control device 600.

For instance, each of the plurality of power panels 100, 200, 300 and 400 may receive a control command from the control device 600 to operate according to the control command, or to transfer state information to the control device 600.

Each of the plurality of power panels 100, 200 and 300, and the supply panel 400 may request the control of the opening and closing of each of the plurality of circuit breakers 130, 230 and 330 to the control device 600 according to a result of controlling and monitoring the operation of the at least one first power conversion device 110, 210, 310 and 410 and the second power conversion device 120, 220, 320 and 420 included therein.

Each of the plurality of power panels 100, 200 and 300, and the supply panel 400 may transfer a result of controlling and monitoring the operation of the at least one first power conversion device 110, 210, 310 and 410 and the second power conversion device 120, 220, 320 and 420 included therein to the control device 600.

Each of the plurality of power panels 100, 200 and 300, and the supply panel 400 may control and monitor the operation of the at least one first power conversion device 110, 210, 310 and 410 and the second power conversion device 120, 220, 320 and 420 included therein to transfer a result of detecting the state of the DC power and the driving power to the control device 600.

Here, each of the plurality of power panels 100, 200 and 300, and the supply panel 400 may further include a control unit 140, 240, 340 and 440 that controls the at least one first power conversion device 110, 210, 310 and 410 and the second power conversion device 120, 220, 320, and 420, and monitors an abnormal state of at least one of the at least one power supply source 10, the at least one first power conversion device 110, the DC power, the driving power, and the load 20.

The control unit 140, 240, 340 and 440 may be a central control device of each of the plurality of power panels 100, 200 and 300, and the supply panel 400.

The control unit 140, 240, 340 and 440 may include a plurality of control elements for controlling the plurality of power panels 100, 200 and 300, and the supply panel 400.

The control unit 140, 240, 340, and 440 may further include a plurality of electronic devices for performing a function of the plurality of power panels 100, 200 and 300, and the supply panel 400.

For instance, the control unit 140, 240, 340, and 440 may include at least one of a storage element that stores software/applications/programs for performing and controlling a function of the plurality of power panels 100, 200 and 300, and the supply panel 400, a dedicated control element including the storage element, a communication element, a display element, and an input element.

In other words, the control unit 140, 240, 340 and 440 may be controlled by the control device 600.

The control unit 140, 240, 340 and 440 may include a programmable logic controller (PLC) that controls the at least one first power conversion device 110, 210, 310 and 410, and the second power conversion device 120, 220, 320 and 420.

The control unit 140, 240, 340 and 440 may monitor the state of the at least one first power conversion device 110, 210, 310 and 410, and the second power conversion device 120, 220, 320 and 420, and control the operation of the at least one first power conversion device 110, 210, 310 and 410, and the second power conversion device 120, 220, 320 and 420 based on a result of monitoring.

The control unit 140, 240, 340 and 440 may also control the operation of the at least one first power conversion device 110, 210, 310 and 410, and the second power conversion device 120, 220, 320 and 420 based on the state of the at least one power supply source 10 and the load 20.

The control unit 140, 240, 340 and 440 may control the operation of each of the at least one first power conversion device 110, 210, 310 and 410 to control the conversion and supply of the DC power.

The control unit 140, 240, 340 and 440 may also control the opening and closing of each opening and closing element included in the at least one first power conversion device 110, 210, 310 and 410.

The control unit 140, 240, 340, and 440 may control the operation of each of the second power conversion devices 120, 220, 320, and 420 to control the conversion and supply of the driving power.

The control unit 140, 240, 340 and 440 may also control the opening and closing of each opening and closing element included in the second power conversion device 120, 220, 320 and 420.

The control unit 140, 240, 340 and 440 may also perform communication with at least one of an external communication device and the control device 600 to control the operation of the at least one first power conversion device 110, 210, 310 and 410, and the second power conversion device 120, 220, 320 and 420 according to a result of performing the com m un ication.

For instance, a control command for the operation control of at least one of the at least one first power conversion device 110, 210, 310 and 410, and the second power conversion device 120, 220, 320 and 420 may be received from the control device 600 to control the operation of at least one of the at least one first power conversion device 110, 210, 310 and 410, and the second power conversion device 120, 220, 320 and 420 according to the control command.

The control unit 140, 240, 340 and 440 may receive power from any one of the at least one power supply source 10 to control the conversion of the power into the DC power.

In other words, the control unit 140, 240, 340 and 440 may control to selectively receive power from any one of the at least one power supply source 10.

The control unit 140, 240, 340 and 440 may receive power from any one of the at least one power supply source 10 according to a preset supply criterion to control the conversion of the power into the DC power.

The supply criterion may be a criterion for priority of power supply of the at least one power supply source 10.

For instance, the priority may be set in the order of the first AC power source 10#1, the second AC power source 10#3, and the battery power source 10#2.

When the supply criterion is as described above, the control unit 140, 240, 340 and 440 may control the supply of power in the order of the first AC power source 10#1, the second AC power source 10#3, and the battery power source 10#2.

When power is supplied from the first AC power source 10#1, the control unit 140, 240, 340 and 440 may control the operation of the first conversion device 110#1, 210#1, 310#1 and 410#1 connected to the first AC power source 10#1.

In this case, the control unit 140, 240, 340 and 440 may close the opening and closing element of the first conversion device 110#1, 210#1, 310#1 and 410#1, and open the opening and closing elements of the second conversion device 110#2, 210#2, 310#2 and 410#2 and the third conversion device 110#3, 210#3, 310#3 and 410#3 to connect the first conversion device 110#1, 210#1, 310#1 and 410#1, and disconnect the second conversion device 110#2, 210#2, 310#2 and 410#2 and the third conversion device 110#3, 210#3, 310#3 and 410#3.

When power is supplied from the second AC power source 10#3, the control unit 140, 240, 340 and 440 may control the operation of the third conversion device 110#3, 210#3, 310#3 and 410#3 connected to the second AC power source 10#3.

In this case, the control unit 140, 240, 340 and 440 may close the opening and closing element of the third conversion device 110#3, 210#3, 310#3 and 410#3, and open the opening and closing elements of the first conversion device 110#1, 210#1, 310#1 and 410#1, and the second conversion device 110#2, 210#2, 310#2 and 410#2 to connect the third conversion device 110#3, 210#3, 310#3 and 410#3, and disconnect the first conversion device 110#1, 210#1, 310#1 and 410#1 and the second conversion device 110#2, 210#2, 310#2 and 410#2.

When power is supplied from the battery power source 10#2, the control unit 140, 240, 340 and 440 may control the operation of the second conversion device 110#2, 210#2, 310#2 and 410#2 connected to the battery power source 10#2.

In this case, the control unit 140, 240, 340 and 440 may close the opening and closing element of the second conversion device 110#2, 210#2, 310#2 and 410#2, and open the opening and closing elements of the first conversion device 110#1, 210#1, 310#1 and 410#1, and the third conversion device 110#3, 210#3, 310#3, and 410#3 to connect only the second conversion device 110#2, 210#2, 310#2, and 410#2, and disconnect the first conversion device 110#1, 210#1, 310#1 and 410#1, and the third conversion device 110#3, 210#3, 310#3, and 410#3.

The control unit 140, 240, 340 and 440 may select any one of the at least one first power conversion device 110, 210, 310 and 410 according to the state of the at least one power supply source 10 to allow the selected conversion device to transfer the DC power to the second power conversion device 120, 220, 320 and 420.

In other words, the control unit 140, 240, 340 and 440 may convert the DC power through a conversion device selected from the at least one first power conversion device 110, 210, 310 and 410 to transfer the converted DC power to the second power conversion device 120.

For instance, when an abnormality occurs in the first AC power source 10#1 and the second AC power source 10#3 among the at least one power supply source 10, the second conversion device 110#2, 210#2, 310#2 and 410#2 connected to the battery power source 10#2 may be selected to control the second conversion device 110#2, 210#2, 310#2 and 410#2 to receive power from the battery power source 10#2 and convert it into the DC power, and transfer the DC power to each of the second power conversion devices 120, 220, 320 and 420.

When an abnormality occurs in at least one of the conversion device 110, 210, 310 and 410 that is transferring the DC power to the second power conversion device 120, 220, 320 and 420 and a power supply source 10 corresponding to the conversion device 110, 210, 310 and 410, the control unit 140, 240, 340 and 440 may control the conversion device110, 210, 310 and 410 other than the conversion device 110, 210, 310 and 410 to transfer the DC power to the second power conversion device 120, 220, 320 and 420.

When an abnormality occurs in at least one of the conversion device 110, 210, 310 and 410 that is transferring the DC power to the second power conversion device 120, 220, 320 and 420 and the power supply sources 10 corresponding to the conversion device 110, 210, 310 and 410, the control unit 140, 240, 340 and 440 may switch the power supply source 10 that is supplying power and the conversion device 110, 210, 310 and 410 to transfer the DC power to allow the conversion device 110, 210, 310 and 410 other than the conversion device 110, 210, 310 and 410 to transfer the DC power to the second power conversion device 120, 220, 320 and 420.

For example, when the first conversion device 110#1, 210#1, 310#1 and 410#1 fails or when a shutdown occurs in the first AC power source 10#1 while receiving power from the first AC power source 10#1 to convert the power into the DC power through the first conversion device 110#1, 210#1, 310#1 and 410#1, the first AC power source 10#1 that is supplying power may be switched to the second AC power source 10#3, and the first conversion device 110#1, 210#1, 310#1 and 410#1 may be switched to the third conversion device 110#3, 210#3, 310#3, and 410#3 to receive power from the second AC power source 10#3 such that the third conversion device 110#3, 210#3, 310#3, and 410#3 converts the DC power to transfer the DC power to the second power conversion device 120, 220, 320 and 420.

In this way, the control unit 140, 240, 340 and 440 that controls the at least one first power conversion device 110, 210, 310 and 410 and the second power conversion device 120, 220, 320 and 420 may request the reception and supply of the DC power to the control device 600 according to the state of the DC power or the driving power.

For example, when the magnitude of the driving power is less than the required magnitude of the load 20, or when the DC power is insufficient, it may be requested to the control device 600 to close the plurality of circuit breakers 130, 230, 330 and 330 so as to receive the DC power from the supply panel 400.

In the opposite case, when a fault current flows to the power end due to a failure occurring in the at least one first power conversion device 110, 210, 310 and 410 or the second power conversion device 120, 220, 320 and 420, or the fault current flows to the power end due to an abnormality occurring in the at least one power supply source 10 or the load 20, it may be requested to the control device to open the plurality of circuit breakers 130, 230 and 330 so as to prevent the fault current being supplied to the plurality power panels 100, 200 and 300 or the supply panel 400.

When an abnormality occurs in the at least one power supply source 10, the control unit 140, 240, 340 and 440 may close the plurality of circuit breakers 130, 230 and 330 to request control to the control device 600 so as to receive the DC power from the other power panel 100, 200 and 300 or the supply panel 400 connected to the power end.

The control device 600 may communicate with each of the plurality of power panels 100, 200 and 300, and the supply panel 400 to control each of the plurality of power panels 100, 200 and 300, and the supply panel 400 based on state information received from each of the plurality of power panels 100, 200 and 300, and the supply panel 400.

For instance, according to the state information of the DC power and the driving power received from each of the plurality of power panels 100, 200 and 300, and the supply panel 400, the conversion and supply of the DC power of each of the plurality of power panels 100, 200 and 300, and the supply panel 400, and the conversion and supply of the driving power of each of the plurality of power panels 100, 200 and 300, and the supply panel 400 may be controlled.

The control device 600 may communicate with each of the plurality of power panels 100, 200 and 300, and the supply panel 400 to convert and supply the driving power to each of the plurality of power panels 100, 200 and 300, and the supply panel 400, or control the plurality of circuit breakers 130, 230 and 330 included in each of the plurality power panels 100, 200 and 300 based on the state information received from each of the plurality of power panels 100, 200 and 300, and the supply panel 400.

The control device 600 may also detect the state of the at least one power supply source 10 and receive information on the state of the at least one power supply source 10 and the load 20 from an external communication element to convert and supply the driving power of each of the plurality of power panels 100, 200 and 300, and the supply panel 400 or control the plurality of circuit breakers 100, 130, 230 and 330 included in the plurality of power panels 100, 200 and 300 based on the state of the at least one power supply source 10 and the load 20.

In this case, the control device 600 may transfer a control command for the conversion and supply of the driving power of each of the plurality of power panels 100, 200 and 300, and the supply panel 400, or the control of each of the plurality of circuit breakers 130, 230, and 330 included in the plurality of power panels 100, 200 and 300 to each of the plurality of power panels 100, 200 and 300, and the supply panel 400 to perform control according to the control command through the control unit 140, 240, 340 and 440 included in each of the plurality of power panels 100, 200 and 300, and the supply panel 400.

For example, when an abnormality occurs in the entire system power source (G) that is supplying power to the plurality of power panels 100, 200 and 300, and the supply panel 400, a control command for opening the plurality of circuit breakers 130, 230 and 330 so as to cut off power supply from the system power source (G) and switch to another supply source, and receive power from a power source other than the system power source (G) so as to convert and supply the DC power may be transferred to the control unit 140, 240, 340 and 440 included in each of the plurality of power panels 100, 200 and 300, and the supply panel 400, thereby opening each of the plurality of circuit breakers 130, 230 and 330, and receiving power from the bypass power source (P) or the battery power source (B) to convert and supply the DC power.

In other words, when an abnormality occurs in at least one power panel 100, 200 and 300, the control device 600 may close the circuit breakers 130, 230 and 330 of the abnormality occurred power panel to allow the the abnormality occurred power panel to receive the DC power from the supply panel 400.

For example, when a failure occurs in the conversion device 110 of the first power panel 100 among the plurality of power panels 100, 200 and 300, in order to supply DC power converted by any one conversion device 410 of the supply panel 400 to the second power conversion device 120 of the first power panel 100 through the DC electric circuit, a control command for closing the first circuit breaker 130 of the first power panel 100, cutting off the at least one first power conversion device 110, 210 and 310 of the first power panel 100, and supplying the DC power converted by any one of the at least one conversion device 410 of the supply panel 400 to the second power conversion device 120 of the first power panel 100 through the DC electric circuit may be transferred to each of the first power panel 100 and the supply panel 400 to close the first circuit breaker 130 of the first power panel 100, and allow any one of the at least one conversion device 410 of the supply panel 400 to supply the DC power to the second power conversion device 120 of the first power panel 100 through the DC electric circuit.

In other words, when an abnormality occurs in the plurality of power panels 100, 200 and 300, the supply panel 400 may supply the DC power to the load 20 of the abnormality occurred power panel through the DC electric circuit.

When the DC power is supplied to the abnormality occurred power panel, the supply panel 400 may select any one of the at least one first power conversion device 410 that converts the DC power according to the state of the at least one power supply source 10 to transfer the DC power to the selected conversion device 410 through the selected electric circuit.

In other words, when the DC power is supplied to the abnormality occurred power panel, the supply panel 400 may transfer the DC power to the DC electric circuit through one conversion device 410 selected according to the state of the at least one power supply source 10, thereby supplying the DC power to the abnormality occurred power panel.

For instance, when a rating of the system power source (G) and the bypass power source (P) among the at least one power supply source 10 that supplies power to the supply panel 400 is lower than a reference rating, the second conversion device 410#2 corresponding to the battery power source (B) may be selected to supply the DC power through the battery power source (B) to convert power received from the battery power source (B) into the DC power through the selected second conversion device 410#2 and transfer the converted DC power to the DC electric circuit.

When an abnormality occurs in the supply panel 400, the control device 600 may close a circuit breaker of a power panel most adjacent to the abnormality occurred power panel, and control the abnormality occurred power panel to receive the DC power from the adjacent power panel through the DC electric circuit.

In other words, when an abnormality occurs in the supply panel 400 that supplies the DC power to the abnormality occurred power panel, and the supply panel 400 fails to supply the DC power to the abnormality occurred power panel, the control device 600 may close the circuit breakers 130, 230 and 330 of the abnormality occurred power panel and a power panel most adjacent the power panel to allow the abnormality occurred power panel to receive the DC power from the adjacent power panel through the DC electric circuit.

For example, when a failure occurs in the conversion device 110 of the first power panel 100 and the supply panel 400 among the plurality of power panels 100, 200 and 300, in order to supply the DC power converted by any one of conversion device 210 of the second power panel 200 most adjacent to the first power panel 100 through the DC electric circuit, a control command for closing the circuit breakers 130 and 230 of the first power panel 100 and the second power panel 200, respectively, cutting off the at least one first power conversion device 110, 210 and 310 of the first power panel 100, and supplying the DC power converted by any one of the plurality of conversion devices 210 of the second power panel 200 to the second power conversion device 120 of the first power panel 100 through the DC electric circuit may be transferred to each of the first power panel 100 and the second power panel 200 to close the circuit breakers 130 and 230 of the first power panel 100 and the second power supply, respectively, and allow any one of the plurality of conversion devices 410 of the second power panel 200 to supply the DC power to the second power conversion device 120 of the first power panel 100 through the DC electric circuit.

When there are a plurality of the abnormality occurred power panels, the control device 600 may close at least one circuit breaker 130, 230 and 330 of the supply panel 400 and a power panel most adjacent to the abnormal occurred power panel according to the abnormal state of each of the abnormality occurred power panels to allow each of the abnormality occurred power panels to receive the DC power from at least one of the supply panel 400 and the adjacent power panel.

In other words, when there are a plurality of the abnormality occurred power panels, the control device 600 may control at least one of the supply panel 400 and the adjacent power panel to supply the DC power to each of the abnormality occurred power panels according to the abnormal state of each of the abnormality occurred power panels.

For example, when a failure occurs in all of the at least one first power conversion device 110, 210 and 310 in the first power panel 100, and the operation of some of the plurality of inverters 220 is interrupted in the second power panel 200, the control device 600 may determine that the abnormal state of the first power panel 100 is more serious than the abnormal state of the second power panel 200, and close the first circuit breaker 130 to allow the supply panel 400 to supply the DC power to the first power panel 100 so as to restore the operation of the first power panel 100 through the supply panel 400, and maintain the operation of the second power panel 200 through the third power panel 300 adjacent to the second power panel 200, and close the second and third circuit breakers 230 and 330 to allow the third power panel 300 to supply the DC power to the power panel 200.

In this way, when an abnormality occurs in at least one of the plurality of power panels 100, 200 and 300, the DC power may be controlled to be supplied from the supply panel 400 to allow the supply panel 400 to perform a UPS function for each of the power panels 100, 200 and 300.

In other words, in the system 1000, each of the plurality of power panels 100, 200 and 300 may be connected in common to the supply panel 400 to allow each of the plurality of power panels 100, 200 and 300 to receive the DC power from the supply panel 400, thereby allowing the supply panel 400 to perform a UPS function for each of the plurality of power panels 100, 200 and 300.

Accordingly, in the system 1000, even when an unexpected abnormality occurs in the at least one power supply source 10, the plurality of power panels 100, 200 and 300, and the load 20, the supply of the driving power to the load 20 may be continuously maintained, thereby maintaining the operation of the load 20 with no interruption, performing an appropriate and active power supply response for an abnormality occurrence, and stably performing the operation of the load 20 and the control of the system 1000 regardless of the type and extent of the abnormality occurrence.

In this way, as for the supply panel 400 that supplies the DC power to the plurality of power panels 100, 200 and 300 in the system 1000, as illustrated in FIG. 4, the plurality of power panels 100, 200 and 300 may be connected to the supply panel 400 in a branch shape, thereby allowing each of the plurality of power panels 100, 200 and 300 to receive the DC power from the supply panel 400, and allowing the supply panel 400 to supply the DC power to each of the plurality of power panels 100, 200 and 300.

At this time, the first circuit breaker 130 included in the first power panel 100 may be closed to connect the first power panel 100 and the supply panel 400 when the supply panel 400 supplies power to the first power panel 100, and the second circuit breaker 230 included in the second power panel 200 may be closed to connect the second power panel 200 and the supply panel 400 when power is supplied to the second power panel 200, and the third circuit breaker 330 included in the third power panel 300 may be closed to connect the third power panel 300 and the supply panel 400 when power is supplied to the third power panel 200, thereby allowing the supply panel 400 to supply the DC power to each of the plurality of power panels 100, 200 and 300.

As described above, the supply panel 400 that supplies the DC power to the plurality of power panels 100, 200 and 300 in the system 1000 may be configured in plural.

In other words, the system 1000 may include a plurality of supply panels 400.

The system 1000 may include the plurality of supply panels 400, and a supply target power panel for supplying the DC power may be predetermined for each of the plurality of supply panels 400 among the plurality of power panels 100, 200 and 300 to supply the DC power to the predetermined supply target power panel.

For the plurality of supply panels 400 configured in plural as described above, a supply target power panel for supplying the DC power may be predetermined for each of the plurality of supply panels 400 among the plurality of power panels 100, 200 and 300 to supply the DC power to the predetermined supply target power panel.

For instance, as illustrated in FIG. 5A, first, second, and third power panels 100, 200 and 300 may be predetermined as supply target power panels for the first supply panel 400, and first-prime (1'st), second-prime (2'nd) and third-prime (3'rd) power panels 100', 200' and 300' may be predetermined as supply target power panels for the second supply panel 400', and the first supply panel 400 may supply the DC power to the first, second, and third power panels 100, 200 and 300 when an abnormality occurs in the first, second, and third power panels 100, 200 and 300, and the second supply panel 400' may supply the DC power to the first-prime (1'st), second-prime (2'nd), and third-prime (3'rd) power panels 100', 200' and 300' when an abnormality occurs in the first-prime (1'st), second-prime (2'nd), and third-prime (3'rd) power panels 100', 200' and 300'.

In other words, in the system 1000, when the supply panel 400 is configured in a plurality, the supply target power panel of the DC power may be predetermined for each of the plurality of supply panels 400, and the supply of the DC power may be performed in a divided manner.

In this case, for the first and second supply panels 400 and 400', the supply target power panels may be switched according to an abnormal state of the plurality of power panels 100, 200 and 300.

In the the system 1000, when the supply panel is configured in plural, a region or group may be operated in a divided manner according to each of the plurality of supply panels 400.

For the supply target power panels, the plurality of power panels 100, 200 and 300, 100', 200' and 300' may be divided into a plurality of groups, and predetermined for each of the plurality of supply panels 100, 200 and 300, 100', 200' and 300' for each of the divided groups, and each of the plurality of supply panels 400 and 400' may supply the DC power to the supply target power panel corresponding to the divided group.

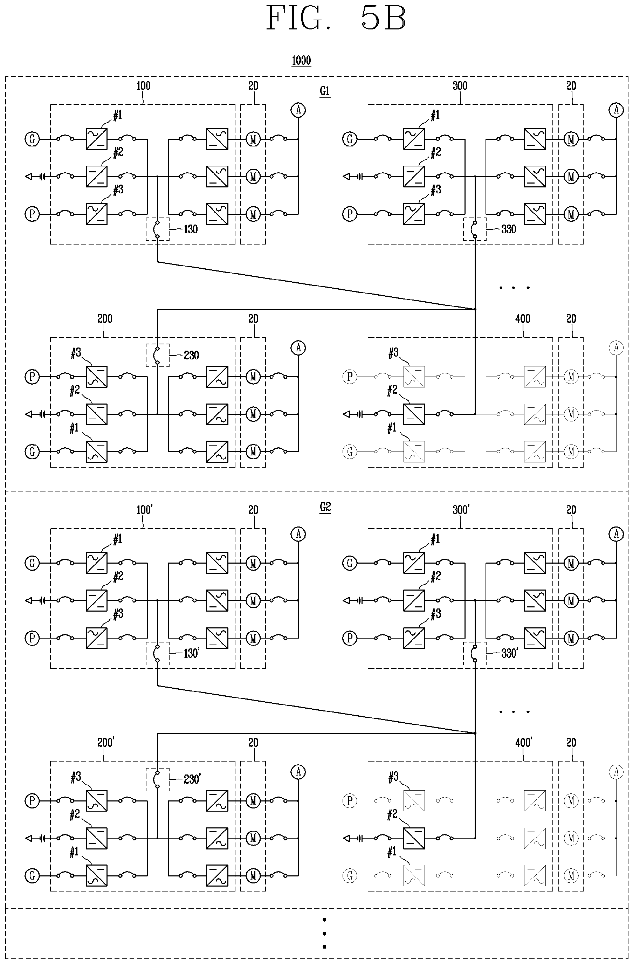

In other words, as illustrated in FIG. 5B, the power panels 100, 200 and 300 corresponding to a first group (G1) may be determined as the supply target power panels for the first supply panel 400, and the power panels 100', 200'and 300'corresponding to a second group (G2) may be determined as the supply target power panels for the second supply panel 400', and each of the first and second supply panels 400 and 400' may be dedicated to each of the power panels 100, 200 and 300, 100', 200', and 300' corresponding to the first and second groups divided by groups to supply the DC power.

In this case, as illustrated in FIG. 5B, the system 1000 may be the same as that configured in plural.

The supply panel 400 may be provided at a position where each of the plurality of power panels 100, 200 and 300 is separated within a predetermined distance.

The supply panel 400 may be provided at a position where a separation distance between each of the plurality of power panels 100, 200 and 300 is minimized.

For instance, in an arrangement structure of the plurality of power panels 100, 200 and 300, the supply panel 400 may be provided at a position corresponding to the center.

In other words, the supply panel 400 may be located in a central portion in a structure in which the plurality of power panels 100, 200 and 300 are disposed.

In this way, when the supply panel 400 is provided at a position corresponding to the center in the arrangement structure of the plurality of power panels 100, 200 and 300, the supply of the DC power to each of the plurality of power panels 100, 200 and 300 may be easily performed, thereby reducing loss occurring in the process of supplying the DC power.

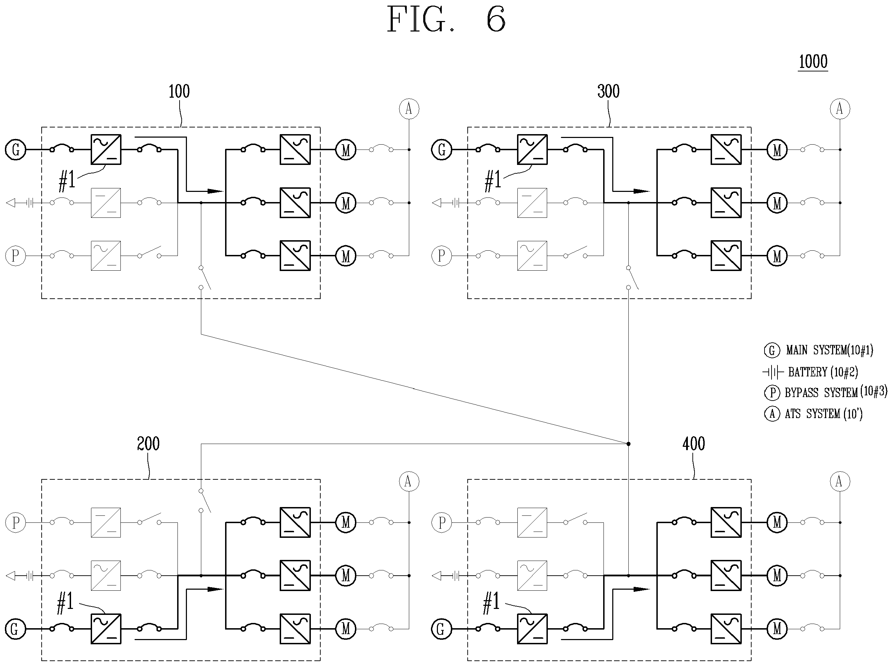

An example of the operation of the system 1000 as described above may be performed as illustrated in FIGS. 6 to 9.

The example of the operation as illustrated in FIGS. 6 to 9 is an example of an operation when the system 1000 includes three power panels 100, 200 and 300 and one supply panel 400, and the system 1000 may include less than three, or three or more of the plurality of power panels 100, 200 and 300, and may include a plurality of the supply panels 400.

A preferred embodiment of the system 1000 may include three power panels 100, 200 and 300 and one supply panel 400 as illustrated in FIGS. 6 to 9, and hereinafter, a case where numbers of the plurality of power panels 100, 200 and 300 and the supply panel 400 are three and one, respectively, illustrated in FIGS. 6 to 9 will be described as an example.

FIG. 6 is a case in which each of the plurality of power panels 100, 200 and 300 and the supply panel 400 receives power from the system power source (G) among the at least one power supply source 10, and in this case, power supply from the bypass power source (P) and the battery power source (B) may be cut off, and power may be supplied through the system power source (G) and converted in the order of the DC power and the driving power to be supplied to each of the loads 20.

The example of operation as illustrated in FIG. 6 is a case of a typical operation in which power is supplied for operation from the system power source (G), and a normal operation of the system 1000 may be performed in this manner.

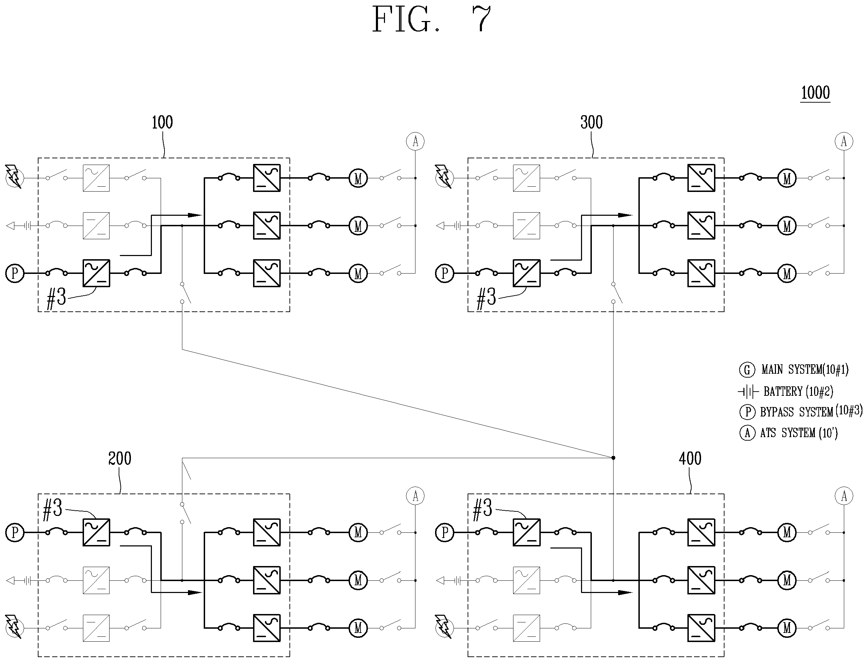

FIG. 7 is a case in which each of the plurality of power panels 100, 200 and 300 and the supply panel 400 receives power from the bypass power source (P) among the at least one power supply source 10, and a case in which an abnormality occurs in the system power source (G) may correspond thereto, and in this case, power supply from the system power source (G) and the battery power source (B) may be cut off, and power may be supplied through the bypass power source (P) and converted in the order of the DC power and the driving power to be supplied to each of the loads 20.

The example of operation as illustrated in FIG. 7 is a case of a special operation in which power is supplied for operation from the bypass power source (P), and the special operation of the system 1000 may be performed in this manner.

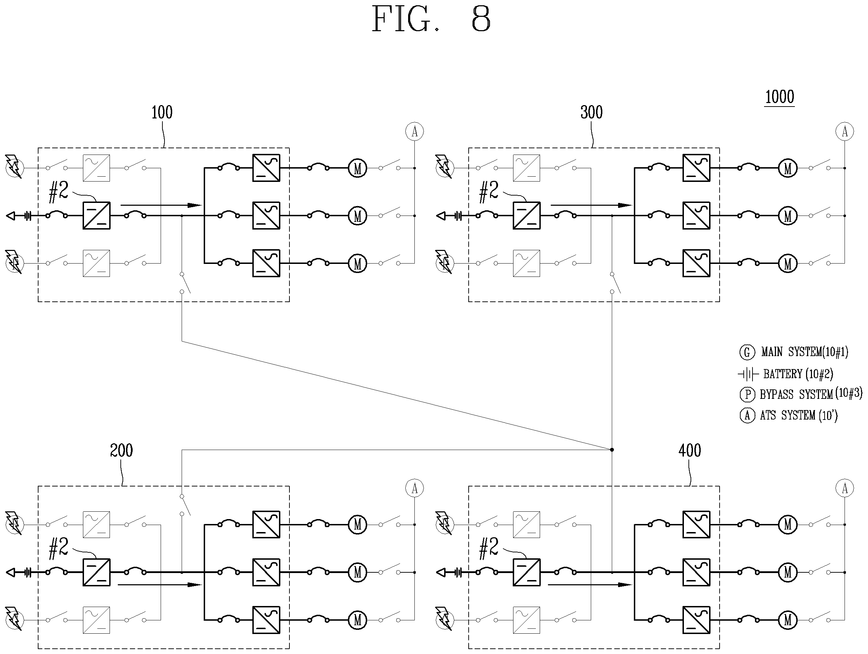

FIG. 8 is a case in which each of the plurality of power panels 100, 200 and 300 and the supply panel 400 receives power from the battery power source (B) among the at least one power supply source 10, and a case in which an abnormality occurs in the system power source (G) and the bypass power source (P) may correspond thereto, and in this case, power supply from the system power source (G) and the bypass power source (P) may be cut off, and power may be supplied through the battery power source (B) and converted in the order of the DC power and the driving power to be supplied to each of the loads 20.

The example of the operation as illustrated in FIG. 8 is a case of a power outage operation in which power is supplied from the battery power source (B), and the power outage operation of the system 1000 may be performed in this manner.

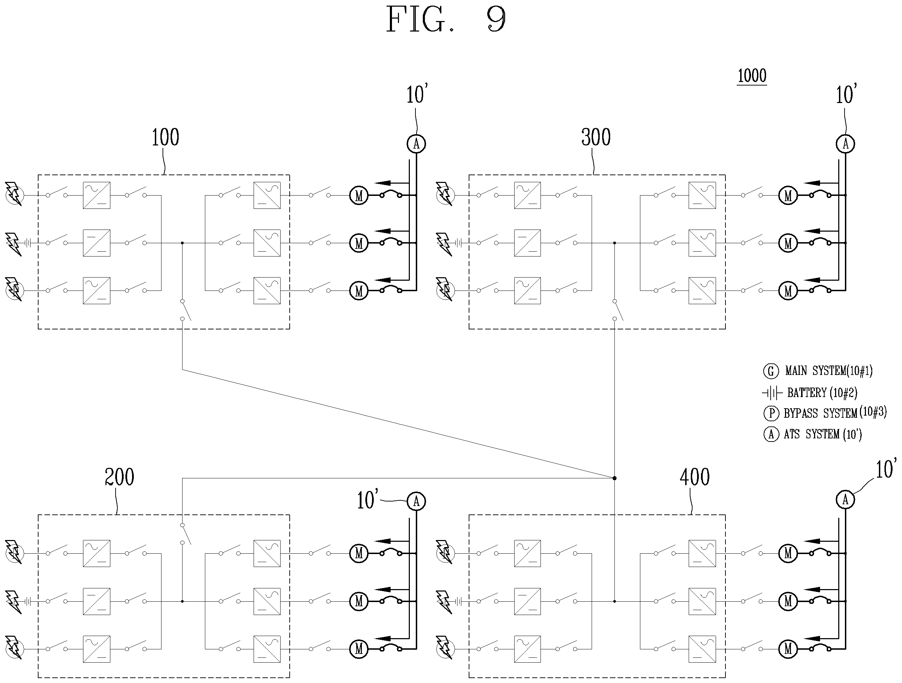

FIG. 9 is a case in which each of the plurality of power panels 100, 200 and 300 and the supply panel 400 receives power from the emergency power source (A) among the at least one power supply source 10, and a case in which an abnormality occurs in the system power source (G), the bypass power source (P) and the battery power source (B) may correspond thereto, and in this case, power supply from the system power source (G), the bypass power source (P) and the battery power source (B) may be cut off, and the emergency power source (A) may directly supply the driving power to each of the loads 20.

The example of the operation as illustrated in FIG. 9 is a case of emergency operation in which power is supplied from the emergency power source (A), and the emergency operation of the system 1000 may be performed in this manner.

As described above, in the system 1000, each of the plurality of power panels 100, 200 and 300 and the supply panel 400 may receive power from the same power supply source for operation, or each of the plurality of power panels 100, 200 and 300 and the supply panel 400 may selectively receive power from any one of the at least one power supply source 10 for operation.

For instance, the first and second power panels 100 and 200 may receive power from the system power source (G) for operation, and the third power panel 300 may receive power from the bypass power source (P) for operation, and the supply panel 400 may receive power from the battery power source (B) for operation.

Furthermore, each of the plurality of power panels 100, 200 and 300 and the supply panel 400 may receive power from at least one power supply source 10 for operation.

For instance, when an abnormality occurs in the first power panel 100 and the DC power is supplied from the second power panel 200 to the first power panel 100, the second power panel 200 may convert power supplied from the system power source (G) into the DC power through the second conversion device 210#1 and transfer the DC power to each of the plurality of inverters 220, and power may be further supplied from the bypass power source (P) to convert the power into the DC power through a second conversion device 210#3, and the DC power converted by the second conversion device 210#3 may be transferred to each of the power conversion device 120 of the power panel 100.

In the case of this example, the first and second circuit breakers 130 and 230 of each of the first power panel 100 and the second power panel 200 may be closed to connect the first power panel 100 and the second power panel 200 and supply the DC power from the second power panel 200 to the first power panel 100.

As described above, each of the plurality of power panels 100, 200 and 300 and the supply panel 400 may receive power from at least one power supply source 10 for operation, thereby performing power supply between the plurality of power panels 100, 200 and 300 and the supply panels 400, that is, a UPS function between the plurality of power panels 100, 200 and 300 and a UPS function of the supply panel 400.

Hereinafter, another embodiment of the power supply system according to the present disclosure will be described.

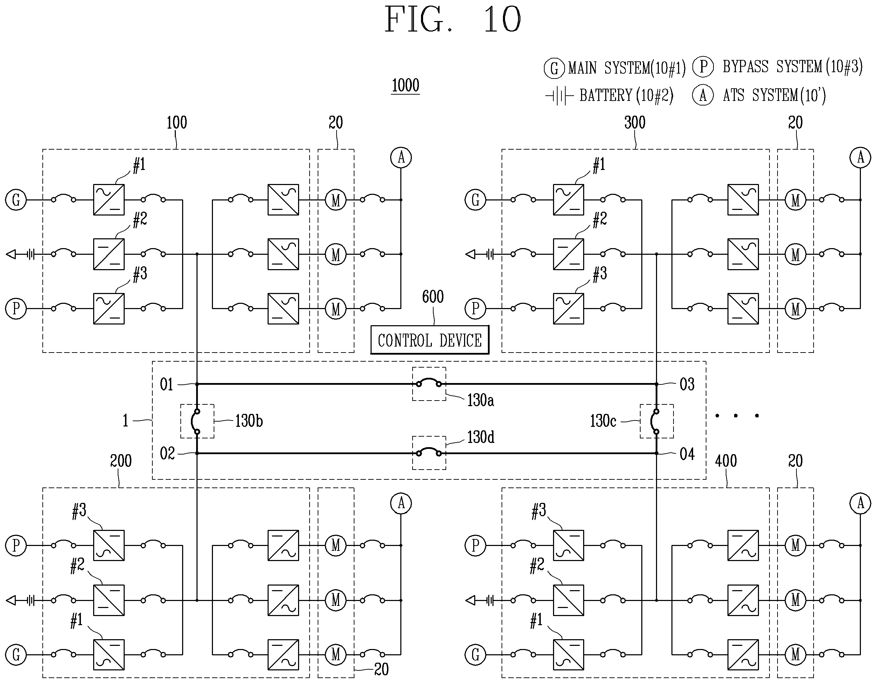

The power supply system 1000 (hereinafter, referred to as a system), as illustrated in FIG. 10, may include a plurality of power panels 100, 200, 300 and 400 that convert power supplied from at least one power supply source 10 into DC power, and convert the DC power into driving power of the load 20 to supply the driving power to the load 20, and a plurality of circuit breakers 130 disposed at one side of each of the plurality of power panels 100, 200, 300 and 400 to connect or disconnect the power ends of two power panels between one side of each of the plurality of power panels 100, 200, 300 and 400 and the other side of a power panel adjacent to the one side, and in the plurality of circuit breakers 130, when power supply is interrupted in at least one of the plurality of power panels 100, 200, 300, and 400, at least one of the circuit breakers connected to one side and the other side of the power panel in which the power supply is interrupted may be closed to connect at least one of the power ends of the power panels connected to both sides of the interrupted power panel and the power end of the interrupted power panel.

In the system 1000, the plurality of circuit breakers 130 may be opened and closed differently according to the power supply state of at least one of the plurality of power panels 100, 200, 300 and 400 to connect or disconnect the DC power between the plurality of pow panels 100, 200, 300 and 400.

The plurality of circuit breakers 130 may connect or disconnect between one side of each of the plurality of power panels 100, 200, 300 and 400 and the other side of a power panel adjacent to the one side to form a connection between the plurality of power panels 100, 200, 300 and 400 in a ring structure.

Accordingly, each of the plurality of power panels 100, 200, 300 and 400 may be connected to two adjacent power panels, and thus the plurality of power panels 100, 200, 300 and 400 may be connected in a ring structure.

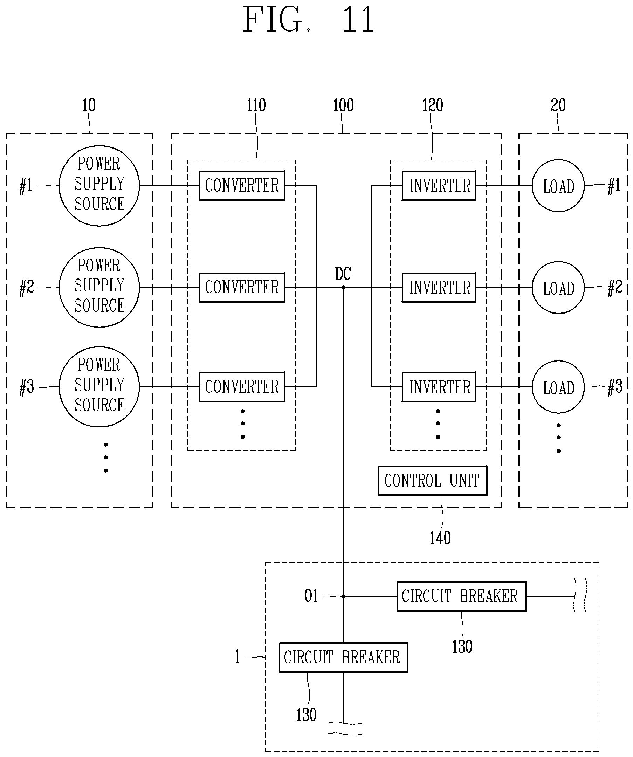

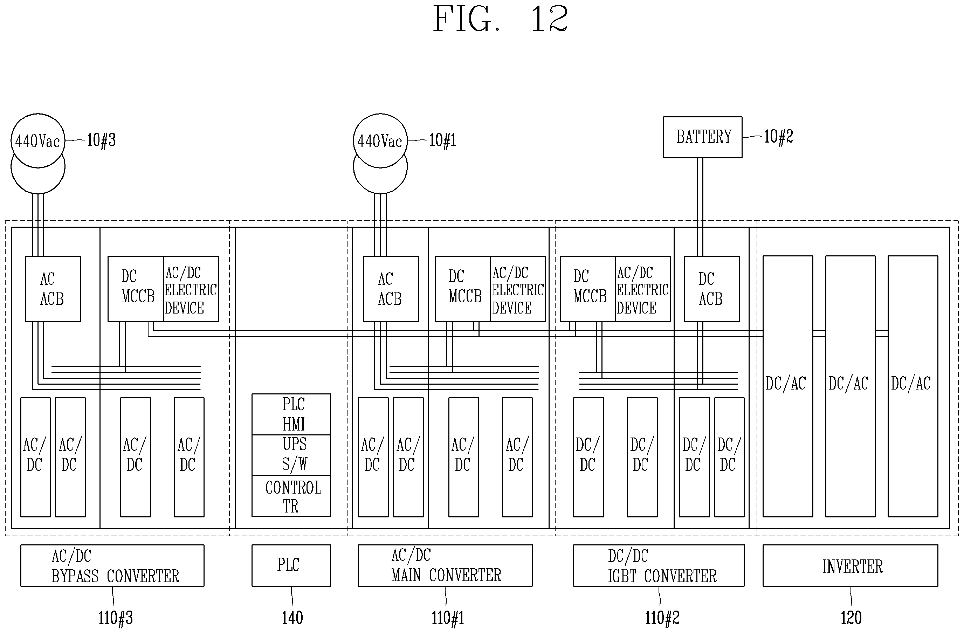

Here, each of the plurality of power panels 100, 200, 300 and 400 may be a power supply device 100 as illustrated in FIGS. 11 and 12.

In other words, the power panel 100 may be configured as a power supply device as illustrated in FIGS. 11 and 12, and the power supply system 1000 may include a plurality of power panels in the form of the power supply device 100 as illustrated in FIGS. 11 and 12, thereby including the plurality of power panels 100, 200 and 300.

The power panel 100, as illustrated in FIG. 11, may include at least one first power conversion device 110 that converts power supplied from each of the at least one power supply source 10 into DC power, and at least one second power conversion device 120 that converts the DC power into the driving power for driving the load 20 to supply the driving power to the load 20.

As such, the power panel 100 includes the at least one first power conversion device 110 and the second power conversion device 120 to convert power supplied from the at least one power supply source 10 into the driving power and supply the driving power to the load 20.

A specific configuration of the power panel 100 including the at least one first power conversion device 110 and the second power conversion device 120 is illustrated as in FIGS. 11 and 12.

The at least one power supply source 10 that supplies power to the power panel 100 may be externally connected to the at least one first power conversion device 110 to supply power to each of the at least one first power conversion device 110.

Each of the at least one power supply source 10 may be connected to each of the at least one first power conversion device 110 to supply DC or AC power to each of the at least one first power conversion device 110.

The at least one power supply source 10 may include a first AC power source 10#1 and a second AC power source 10#3 that supply AC power, and a battery power source 10#2 that stores DC power, as illustrated in FIGS. 11 and 12.

Here, the first AC power source 10#1 may be a main system power source (G) that supplies AC power, the second AC power source 10#3 may be a bypass system power source (P) that supplies AC power, and the battery power source 10#2 may be a battery power source (B) that supplies DC power.

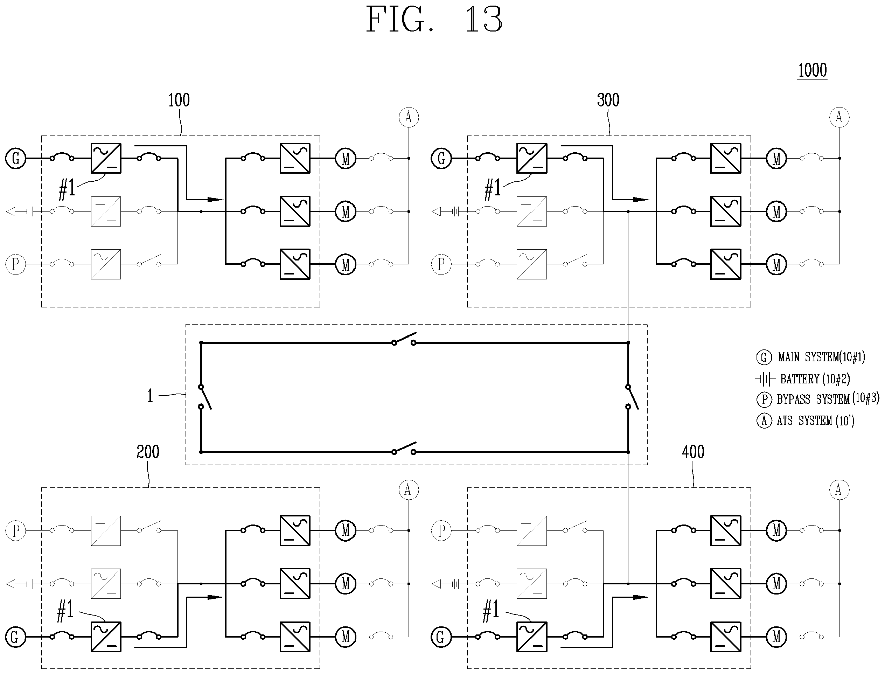

In other words, the at least one power supply source 10 may include a system power source (G), a bypass power source (P), and a battery power source (B), as illustrated in FIG. 13.

Accordingly, each of the plurality of power panels 100, 200, 300 and 400 may be supplied with power from each of the system power source (G), the bypass power source (P), and the battery power source (B).

The first AC power source 10#1 may be a system power source (G).

The first AC power source 10#1 may be a system power source (G) that supplies AC power of 440 [V].

The second AC power source 10#3 may be a bypass power source (P).

The second AC power source 10#3 may be a bypass power source (P) that supplies 440 [V] of AC power.

The battery power source 10#2 may be an emergency battery source that stores DC power and supplies the stored DC power in an emergency.

The battery power source 10#2 may supply stored DC power to the power panel 100 when an abnormality occurs in the first AC power source and the second AC power source.

The DC power may be stored in the battery power source (B), and when the power supply of the first AC power source 10#1 and the second AC power source 10#3 is interrupted, power stored in the battery power source (B) may be supplied to the plurality of power panels 100, 200, 300 and 400 while the power supply is switched and restored.

After the power supply is interrupted, the battery power source (B) may supply the stored power to the plurality of power panels 100, 200, 300 and 400 with no interruption until the power supply is switched and restored.

The at least one power supply source 10 may also further include an emergency power source (A) that supplies emergency generation power to the load 20 when the power supply of the first AC power source (G), the second AC power source (P), and the battery power source (B) is interrupted.

When an abnormality occurs in the first AC power source (G), the second AC power source (P) and the battery power source (B), emergency generation power may be supplied to the load 20.

When an abnormality occurs in all of the first AC power source (G), the second AC power source (P), and the battery power source (B) that supply power to each of the plurality of power panels 100, 200, 300 and 400 so as not to supply power, the emergency power source (A) may be a power source that supplies emergency power to each of the loads 20 to maintain the driving of the load 20 for a predetermined period of time.

For instance, the emergency power source (A) may be a power source including an emergency generator.

Each of the plurality of power panels 100, 200, 300 and 400 may be preferably supplied with power from three power supply sources 10, which are the system power source (G), the bypass power source (P) and the battery power source (B) as illustrated in FIG. 13, and supplied with power only when the system power source (G), the bypass power source (P), and the battery power source (B) are unable to supply power from the emergency power source (A).

Here, each of the at least one power supply source 10 that supplies power to each of the plurality of power panels 100, 200, 300 and 400 may supply power to each of the plurality of power panels 100, 200, 300 and 400 in one system or supply power to each of the plurality of power panels 100, 200, 300 and 400 through a separate distribution panel or from each separate distribution panel.

Each of the plurality of power panels 100, 200, 300, 400 may include the at least one first power conversion device 110, 210, 310 and 410 that converts power supplied from the at least one power supply source 10 into the DC power, and the second power conversion device 120, 220, 320, 420 that converts the DC power supplied from the at least one first power conversion device 110, 210, 310 and 410 into the driving power and supplies the driving power to the load 20.

Here, the at least one first power conversion device 110, 210, 310 and 410 and the second power conversion device 120, 220, 320 and 420 may be provided in plural.

Each of the plurality of power panels 100, 200, 300 and 400 may supply the DC power to at least one second power conversion device 120, 220, 320 and 420 through one of the at least one first power conversion device 110, 210, 310 and 410 according to the state of the at least one power supply source 10.

The first power conversion device 110, 210, 310 and 410, which is a device that converts supplied power into DC power, and may be a converter, for instance.

The first power conversion device 110, 210, 310 and 410 may be an AC/DC converter that converts AC power into DC power, or a DC/DC converter that converts DC power into DC power.

The at least one first power conversion device 110, 210, 310 and 410 may include at least one of an AC/DC converter that converts AC power into DC power and a DC/DC converter that converts a level of DC power.

The at least one first power conversion device 110, 210, 310 and 410 may include three conversion devices 110#1 to #3, 210#1 to #3, 310#1 to #3 and 410#1 to #3 corresponding to the at least one power supply source 10, respectively.

The at least one first power conversion device 110, 210, 310 and 410 may include first to third conversion devices 110#1 to #3, 210#1 to #3, 310#1 to #3 and 410#1 to #3 connected to the first AC power source 10#1, the battery power source 10#2, and the second AC power source 10#3, respectively, to receive power from the power supply sources connected thereto.

According to this, the first AC power source 10#1 is connected to the first conversion device 110#1, 210#1, 310#1 and 410#1 to supply AC power to the first conversion device 110#1, 210#1, 310#1 and 410#1, and the battery power source 10#2 is connected to the second conversion device 110#2, 210#2, 310#2 and 410#2 to supply DC power to the second conversion device 110#2, 210#2, 310#2 and 410#2, and the second AC power source 10#3 is connected to the third conversion device 110#3, 210#3, 310#3 and 410#3 to supply AC power to the third conversion device 110#3, 210#3, 310#3 and 410#3.

The first conversion device 110#1, 210#1, 310#1 and 410#1 may be an AC/DC converter that converts AC power into DC power, and the second conversion device 110#2, 210# 2, 310#2 and 410#2 may be a DC/DC converter that converts a level of DC power, and the third conversion device 110#3, 210#3, 310#3 and 410#3 may be an AC/DC converter that converts AC power into DC power.

Each of the at least one first power conversion device 110, 210, 310 and 410 may include an opening and closing element for opening and closing a connection at front and rear ends thereof, respectively.

The opening and closing element may be a switch provided at each of input and output ends of each of the at least one first power conversion device 110, 210, 310 and 410 to control power that is input and output from and to the at least one first power conversion device 110, 210, 310 and 410.

Here, the opening and closing element provided at the input end may be a circuit breaker that senses an overcurrent to cut off a circuit.

More specifically, an AC air circuit breaker (ACB) may be provided at an input end of the first conversion device 110#1, 210#1, 310#1 and 410#1 and the third conversion device110#3, 210#3, 310#3 and 410#3 that receive AC power from the first AC power source 10#1 and the second AC power source 10#3, and a DC molded circuit breaker (MCCB) may be provided at an input end of the second conversion device 110#2, 210#2, 310#2 and 410#2 that receives DC power from the battery power source 10#2.

The opening and closing element may open and close the connection of the at least one first power conversion device 110, 210, 310 and 410 according to the operation of the at least one first power conversion device 110, 210, 310 and 410.

For instance, when power is not supplied from the at least one power supply source 10, the opening and closing element provided at each of the input end and the output end is opened to separate the connection of the relevant conversion device.

In the at least one first power conversion device 110, 210, 310, and 410, the output end may be connected to one power end O1, O2, O3, and O4.

In other words, in the at least one first power conversion device 110, 210, 310 and 410, the output end may be connected in common to the power ends (O1, O2, O3 and O4), and the DC power converted by the at least one first power conversion device 110, 210, 310 and 410 may flow therethrough.

Accordingly, the power ends (O1, O2, O3 and O4) may be an electric circuit to which the output ends of the at least one first power conversion device 110, 210, 310 and 410 are connected in common to allow the DC power output from the at least one first power conversion device 110, 210, 310 and 410 to flow therethrough.

The power end (O1, O2, O3 and O4) may be connected to an input end of the second power conversion device 120, 220, 320, and 420.

The power end (O1, O2, O3 and O4) may be connected to any two power ends (O1 to O4) of the power ends of the other power panel 100, 200, 300, or 400.

The power end (O1, O2, O3 and O4) may be connected to an input end of the second power conversion device 120, 220, 320 and 420, respectively, to transfer the DC power to the other power panel 100, 200, 300 or 400 or transfer the DC power to the second power conversion device 120, 220, 320 and 420.

The power ends (01, O2, O3 and O4) may be connected to any two circuit breakers among the plurality of circuit breakers 130.

In other words, the connection of the power ends (01, O2, O3 and O4) may be controlled by any two circuit breakers connected to the power ends (01, O2, O3 and O4).

Through this, the DC power transferred from the power ends (01, O2, O3 and O4) may be controlled by the circuit breakers connected to the power ends (01, O2, O3 and O4).

In this way, the power end (01, O2, O3 and O4) to which the output ends of the at least one first power conversion device 110, 210, 310 and 410 are connected in common may be connected to the power end of the adjacent power panel and the input end of the second power conversion devics 120, 220, 320 and 420, thereby achieving the transfer of the DC power converted and output from the at least one first power conversion device 110, 210, 310 and 410 through the power end (01, O2, O3 and O4).

The DC power converted and output from the at least one first power conversion device 110, 210, 310 and 410 may be transferred to the second power conversion device 120, 220, 320 and 420.

In the at least one first power conversion device 110, 210, 310 and 410, any one of the first to third conversion devices 110#1 to 110#3, 210#1 to 210#3, 310#1 to 310# 3 and 410#1 to 410#3 may be operated to supply the DC power to the second power conversion device 120, 220, 320 and 420.

When the power supply of the conversion device 110#1 to #3, 210#1 to #3, 310#1 to #3 and 410#1 that supplies the DC power to the second power conversion device 120, 220 320 and 420 is interrupted, the plurality of power panels 100, 200, 300 and 400 may supply the DC power to the second power conversion device 120, 220, 320 and 420 through a conversion device other than the conversion devices 110#1 to #3, 210#1 to #3, 310#1 to #3 and 410#1 to #3.

When the power supply of the conversion device 110#1 to #3, 210#1 to #3, 310#1 to #3 and 410#1 to #3 that supplies the DC power to the second power conversion device 120, 220, 320 and 420 is interrupted, the at least one first power conversion device 110, 210, 310 and 410 may supply the DC power to the second power conversion device 120, 220, 320 and 420 through the conversion device 110#2, 210#2, 310#2 and 410#2 that receives power from the battery power source 10#2 while the conversion device 110#1 to #3, 210#1 to #3, 310#1 to #3 and 410#1 to #3 is switched to the other conversion device.

Here, a case where the power supply of the conversion devices 110#1 to #3, 210#1 to #3, 310#1 to #3 and 410#1 to #3 is interrupted may be when an abnormal state is detected from at least one of the conversion devices 110#1 to #3, 210#1 to #3, 310#1 to #3 and 410#1 to #3, a supply source connected to the conversion devices 110#1 to #3, 210#1 to #3, 310#1 to #3 and 410#1 to #3, and a rating of the DC power.

For instance, when the rating of the DC power output from the first conversion device 110#1, 210#1, 310#1 and 410#1 is reduced below a predetermined reference while the first conversion device 110#1, 210#1, 310#1 and 410#1 connected to the first AC power source 10#1 supplies the DC power to the second power conversion device 120, 220, 320 and 420, the third conversion device 110#3, 210#3, 310#3 and 410#3, which is a conversion device other than the first conversion device 110#1, 210#1, 310#1 and 410#1#1, may supply the DC power to the second power conversion device 120.

In this case, while the first conversion device 110#1, 210#1, 310#1, and 410#1 is switched to the third conversion device 110#3, 210#3, 310#3 and 410#3, the at least one first power conversion device 110, 210, 310 and 410 may supply the DC power to the second power conversion device 120, 220, 320, and 420 through the the second conversion device 110#2, 210#2, 310#2 and 410#2 connected to the battery power source 10#2.

In other words, when the supply of the DC power to the second power conversion device 120, 220, 320, 420 is interrupted, the second conversion device 110#2, 210#2, 310#2, 410#2 connected to the battery power source 10#2 may supply the DC power to the second power conversion device 120, 220, 320, 420 until the supply of the DC power is switched and restored.

The second power conversion device 120, 220, 320 and 420 may be configured in plural.

The second power conversion device 120, 220, 320 and 420, which is a device that converts the supplied DC power into the driving power, may be an inverter, for instance.

When the load is a load driven by AC power, the second power conversion device 120, 220, 320 and 420 may be an inverter that converts DC power transferred from the at least one first power conversion device 110, 210, 310 and 410 into AC driving power.

When the load is a load driven by DC power, the second power conversion device 120, 220, 320 and 420 may be an inverter that converts DC power transferred from the at least one first power conversion device 110, 210, 310 and 410 into DC driving power.

The second power conversion device 120, 220, 320 and 420 may be provided in a number corresponding to that of the loads 20.

The load 20 may be configured in plural.

The second power conversion device 120, 220, 320 and 420 may include three or more inverters 120#1 to #3, 220#1 to #3, 320#1 to #3 and 420#1 to #3 to correspond to the loads 20.

Each of the second power conversion devices 120, 220, 320 and 420 may be connected to each of the loads 20 to supply the driving power to the connected load.

Each of the second power conversion devices 120, 220, 320 and 420 may include an opening and closing element for opening and closing a connection at a front end thereof.

The opening and closing element may be a switch provided at an input end of each of the second power conversion devices 120, 220, 320 and 420 to control power that is input to the second power conversion device 120, 220, 320 and 420.

Here, the opening and closing element provided at the input end may be a circuit breaker that senses an overcurrent to cut off a circuit.

The driving power converted and output by the second power conversion device 120, 220, 320 and 420 may be transferred to each of the loads 20.

Here, the loads 20 may include a motor (M) load.

In each of the plurality of power panels 100, 200, 300 and 400, the power end (01 to O4) may be connected to each of the power ends (01 to O4) of two adjacent power panels among the other power panels.

In the plurality of power panels 100, 200, 300 and 400, the plurality of circuit breakers 130 may be respectively disposed between the power ends (01 to O4) of any two power panels adjacent to the power end (01 to O4) of any one power panel.

The power end (01 to O4) of each of the plurality of power panels 100, 200, 300 and 400 may be connected to the plurality of circuit breakers 130 (130a to 130d).

In each of the plurality of power panels 100, 200, 300 and 400, the power end (01 to O4) from which the DC power is output may be connected to any two of the plurality of circuit breakers 130.

In other words, the power end (01 to O4) of each of the plurality of power panels 100, 200, 300 and 400 may be connected to two circuit breakers.

For instance, when the number of the plurality of power panels 100, 200, 300 and 400 is four as illustrated in FIG. 1, the first power panel 100 may be connected to the first circuit breaker 130a and the second circuit breaker 130b, the second power panel 200 to the second circuit breaker 130b and the fourth circuit breaker 130d, and the third power panel 300 to the first circuit breaker 130a and the third circuit breaker 130d, and the fourth power panel 400 to the third circuit breaker 130c and the fourth circuit breaker 130d, respectively.

Accordingly, each of the plurality of circuit breakers 130 may be connected to two power panels.

For instance, the first circuit breaker 130a may be connected to the first power panel 100 and the third power panel 300, the second circuit breaker 130b to the first power panel 100 and the second power panel 200, the third circuit breaker 130c to the third power panel 300 and the fourth power panel 400, and the fourth circuit breaker 130d to the second power panel 200 and the fourth power panel 400, respectively.

In the plurality of power panels 100, 200, 300 and 400, a power end of any one power panel may be connected to each of the power ends of the other two power panels.

In other words, the plurality of power panels 100, 200, 300 and 400 may be connected to each of the other two power panels.

For instance, the first power panel 100 may be connected to the third power panel 300 through the first circuit breaker 130a, and connected to the second power panel 200 through the second circuit breaker 130b, and thus may be connected to each of the second and third power panels 200 and 300.

Furthermore, the second power panel 200 may be connected to the first power panel 100 through the second circuit breaker 130b, and connected to the third power panel 300 through the fourth circuit breaker 130d, and thus may be connected to each of the first and fourth power panels 100 and 400.

Furthermore, the third power panel 300 may be connected to the first power panel 100 through the first circuit breaker 130a, and connected to the fourth power panel 400 through the third circuit breaker 130c, and thus may be connected to each of the first and fourth power panels 100 and 400.

Furthermore, the fourth power panel 400 may be connected to the third power panel 300 through the fourth circuit breaker 430, and connected to the first power panel 200 through the first circuit breaker 130, and thus may be connected to each of the first and third power panels 200 and 300.

The plurality of circuit breakers 130 connected to the power end (01 to O4) may be DC breakers that cut off DC power.

Each of the power ends (01 to O4) may be connected to any two of the plurality of circuit breakers 130.

Each of the plurality of power panels 100, 200, 300 and 400 may include a first power end corresponding to one end of the power end and a second power end corresponding to the other end of the power end, wherein the plurality of circuit breakers 130 are respectively disposed between two power panels to connect or disconnect a first power end of a power panel at one side and a second power end of a power panel at the other side.

The first power end and the second power end may be power ends in which the power ends of the plurality of power panels 100, 200, 300 and 400 extend.

The first power end and the second power end may be power ends in which the power ends of the plurality of power panels 100, 200, 300 and 400 are extended and connected to the plurality of circuit breakers 130 at an outside of the plurality of power panels 100, 200, 300 and 400.

In other words, the first power end and the second power end may correspond to power ports of the plurality of power panels 100, 200, 300 and 400.

Accordingly, each of the plurality of power panels 100, 200, 300 and 400 may be provided with two power ports of the first and second power ends.

In this case, the plurality of circuit breakers 130 may be respectively disposed between two power panels to connect or disconnect a first power end of a power panel at one side and a second power end of a power panel at the other side.

In other words, each of the plurality of circuit breakers 130 may be respectively disposed between a first power end of a power panel at one side and a second power end of a power panel at the other side, and connected to each of the first power end and the second power end of the two power panels.

Accordingly, each of the plurality of circuit breakers 130 may may be respectively connected a first power end of any one power panel at one side, and a second power end of a power panel adjacent to the any one power panel at the other side.

Accordingly, each of the plurality of power panels 100, 200, 300 and 400 may be connected to two power panels, respectively, at both sides to form an inter-loop connection structure between th plurality of power panels 100, 200, 300 and 400.

The plurality of circuit breakers 130 may be provided on each of the electric circuits between the power ends of the two adjacent power panels among the power ends (01 to O4) to control a connection between the plurality of power panels 100, 200, 300 and 400.

The plurality of circuit breakers 130 may be provided on each of the electric circuits in which two adjacent power ends are connected to each other among the power ends (01 to O4) to which the output end of each of the at least one first power conversion device 110, 210, 310 and 410 is connected in the plurality of power panels 100, 200, 300 and 400.

In other words, the plurality of circuit breakers 130 may be provided between the power ends (01 to O4) to control a connection between the plurality of power panels 100, 200, 300 and 400.

Accordingly, the plurality of power panels 100, 200, 300 and 400 are connected to each other through the power ends (01 to O4), and a connection between the plurality of power panels 100, 200, 300 and 400 may be controlled by the opening and closing of the plurality of circuit breakers 130.

The plurality of circuit breakers 130 disposed between the power ends (01 to O4) to connect or disconnect the power ends (01 to O4) may be DC-only molded case circuit breakers (MCCBs).

The plurality of circuit breakers 130 may be opened and closed differently according to the state of at least one of the DC power, the driving power, the at least one first power conversion device 110, 210, 310 and 410, and the load 20 to connect or disconnect the DC power between the power ends (01 to O4).

Here, the at least one state may be at least one of when the DC power is changed from its initial state, when the driving power is changed from its initial state, when the power supply state of the at least one first power conversion device 110, 210, 310 and 410 is changed, and when the driving state of the load 20 is changed.

For instance, the at least one state may include when the DC power or the driving power falls below a reference rating, when a failure/accident occurs in the at least one first power conversion device 110, 210, 310 and 410 to change the power supply state, or when the driving power supplied to the load 20 is reduced to change the driving state of the load 20.

In the plurality of power panels 100, 200, 300 and 400, the plurality of circuit breakers 130 disposed between the power ends (01 to O4) may connect or disconnect each of the plurality of power panels 100, 200, 300 and 400 to or from a power panel adjacent thereto, thereby forming a connection between the power ends (01 to O4) in a ring structure.

For instance, the power ends (01 to O4) of each of the plurality of power panels 100, 200, 300 and 400 may be connected to transfer the DC power between the plurality of power panels 100, 200, 300 and 400.

Accordingly, plurality of circuit breakers 100, 200, 300 and 400 may be connected in a loop shape.

In other words, the power ends (01 to O4) of each of the plurality of power panels 100, 200, 300 and 400 may be connected in a loop shape, thereby allowing the connection of the power ends (01 to O4) of each of the plurality of power panels 100, 200, 300 and 400 to be connected in a loop shape.

The plurality of power panels 100, 200, 300 and 400 may be configured with the number of electric circuits in which each of the power ends (01 to O4) of two power panels adjacent to the power end (01 to O4) of any one of the plurality of power panels 100, 200, 300 and 400 is connected.

For instance, the DC electric circuit may include a first electric circuit to which the first power panel 100 and the third power panel 300 are connected, a second electric circuit to which the first power panel 100 and the second power panel 200 are connected, a third electric circuit to which the third power panel 300 and the fourth power panel 400 are connected, and a fourth electric circuit to which the second power panel 200 and the fourth power panel 400 are connected In addition, and the first to fourth electric circuits may be configured in a loop shape.

Here, the first circuit breaker 130a may be provided in the first electric circuit, the second circuit breaker 130b in the second electric circuit, the third circuit breaker 130c in the third electric circuit, and the fourth circuit breaker 130d in the fourth electric circuit, respectively, to control the opening and closing of the first to fourth electric circuits.

Accordingly, the plurality of circuit breakers 130, 230, 330 and 430 may control a connection between the plurality of power panels 100, 200, 300 and 400 through the DC electric circuit in which the plurality of electric circuits are configured in a loop shape.

The plurality of circuit breakers 130 may be provided with a number corresponding to the plurality of power panels 100, 200, 300 and 400.

The plurality of circuit breakers 130 may be provided with a number of N when the number of plurality of power panels 100, 200, 300 and 400 is N.

For instance, when the number of the plurality of power panels 100, 200, 300 and 400 is four, that is, when N is 4, four power panels may be provided.

Each of the plurality of circuit breakers 130 may be opened at normal times and closed during operation, thereby controlling connection between the plurality of power panels 100, 200, 300 and 400.

Accordingly, each of the plurality of power panels 100, 200, 300 and 400 may be connected to other power panels through the opening and closing of each of the plurality of circuit breakers 130.

The plurality of circuit breakers 130 may be closed when the DC power is connected between the plurality of power panels 100, 200, 300 and 400, and may be opened when the DC power is disconnected between the plurality of power panels 100, 200, 300 and 400.

A form in which each of the plurality of power panels 100, 200, 300 and 400 is connected to another power panel through the plurality of circuit breakers 130 may be as illustrated in FIG. 10.

In the plurality of power panels 100, 200, 300 and 400, as illustrated in FIG. 10, the power ends (01 to O4) of each of the first power panel 100, the second power panel 200, and the third power panel 300, and the fourth power panel 400 may be connected in a ring structure, and each of the first to fourth circuit breakers 130a to 130d may be provided between the power ends (01 to O4) of each of the plurality of power panels 100, 200, 300 and 400.

The connection form will be described in more detail with reference to FIG. 10 as follows.

The connection form will be described in more detail with reference to FIG. 10 as follows.

The first power end (01) of the first power panel 100 may be connected to the second power end (O2) of the second power panel 200 and the third power end (O3) of the third power panel 300, which are adjacent thereto, but the second circuit breaker 130b may be provided between the first and second power ends (01 and O2), and the first circuit breaker 130a may be provided between the first and third power ends (01 and O3), and a connection between the first and second power panels 100 and 200 may be controlled by the second circuit breaker 130b, and a connection between the first and third power panels 100 and 300 may be controlled by the first circuit breaker 130a.

The second power end (O2) of the second power panel 200 may be connected to the first power end (01) of the first power panel 100 and the fourth power end (O4) of the fourth power panel 400, which are adjacent thereto, but the second circuit breaker 130b may be provided between the first and second power ends (01 and O2), and the fourth circuit breaker 130d may be provided between the second and fourth power ends (O2 and O4), and thus the a connection between the first and second power panels 100 and 200 may be controlled by the second circuit breaker 130b, and a connection between the second and fourth power panels 200 and 400 may be controlled by the fourth circuit breaker 130d.

The third power end (O3) of the third power panel 300 may be connected to the first power end (01) of the first power panel 100 and the fourth power end (O4) of the fourth power panel 400, which are adjacent thereto, but the first circuit breaker 130a may be provided between the first and third power ends (01 and O3), and the third circuit breaker 130c may be provided between the third and fourth power ends (O3 and O4), and a connection between the first and third power panels 100 and 300 may be controlled by the first circuit breaker 130a, and a connection between the third and fourth power panels 300 and 400 may be controlled by the third circuit breaker 130c.

The fourth power end (O4) of the fourth power panel 400 may be connected to the second power end (O2) of the second power panel 200 and the third power end (O3) of the third power panel 300, which are adjacent thereto, but the fourth circuit breaker 130d may be provided between the second and fourth power ends (O2 and O4), and the third circuit breaker 130c may be provided between the third and fourth power ends (O3 and O4), and a connection between the second and fourth power panels 200 and 400 may be controlled by the fourth circuit breaker 130d, and a connection between the third and fourth power panels 300 and 400 may be controlled by the third circuit breaker 130c.

As the first to fourth power panels 100, 200, 300 and 400 are connected in this way, the power ends (O1 to O4) of the plurality of power panels 100, 200, 300 and 400 may be connected in a loop shape.

In this way, each of the plurality of power panels 100, 200, 300 and 400 may be connected to an adjacent power panel, thereby transferring the DC power between the plurality of power panels 100, 200, 300 and 400.

In other words, each of the plurality of power panels 100, 200, 300 and 400 may be connected to an adjacent power panel, and the power ends (O1 to O4) of the plurality of power panels 100, 200, 300 and 400 may be connected in a loop shape as illustrated in FIG. 10, and as a result, the first power panel 100 may be connected to the second power panel 200 and the third power panel 300 to receive and supply the DC power from and to the second power panel 200 or the third power panel 300, and the second power panel 200 may be connected to the first power panel 100 and the fourth power panel 400 to receive and supply the DC power from and to the first power panel 100 or the fourth power panel 400, and the third power panel 300 may be connected to the first power panel 100 and the fourth power panel 400 to receive and supply the DC power from and to the first power panel 100 or the fourth power panel 400, and the fourth power panel 400 may be connected to the second power panel 200 and the third power panel 300 to receive and supply the DC power from and to the second power panel 200 or the third power panel 300.

In the plurality of power panels 100, 200, 300 and 400 connected in a loop shape as described above, the reception and supply of the DC power between the plurality of power panels 100, 200, 300 and 400 may be performed by opening and closing each of the plurality of circuit breakers 130.

For instance, the reception and supply of the DC power between the first power panel 100 and the third power panel 300 may be performed when the first circuit breaker 130a connected to an electric circuit between the first power panel 100 and the second power panel 200 is closed, and the reception and supply of the DC power between the first power panel 100 and the second power panel 200 may be performed when the first circuit breaker 130b connected to an electric circuit between the first power panel 100 and the second power panel 200 is closed, and the reception and supply of the DC power between the third power panel 300 and the fourth power panel 400 may be performed when the third circuit breaker 130c connected to an electric circuit between the third power panel 300 and the fourth power panel 400 is closed, and the reception and supply of the DC power between the second power panel 200 and the fourth power panel 400 may be performed when the fourth circuit breaker 130d connected to an electric circuit between the second power panel 200 and the fourth power panel 400 is closed.

Each of the plurality of power panels 100, 200, 300 and 400 may control and monitor the operation of the at least one first power conversion device 110, 210, 310 and 410 and the second power conversion device 120, 220, 320 and 420 included therein.

Each of the plurality of power panels 100, 200, 300 and 400 may control the opening and closing of each of the first to fourth circuit breakers 130a to 130d according to a result of controlling and monitoring the operation of the at least one first power conversion device 110, 210, 310 and 410 and the second power conversion device 120, 220, 320 and 420 included therein.

Each of the plurality of power panels 100, 200, 300 and 400 may control and monitor the operation of the at least one first power conversion device 110, 210, 310 and 410 and the second power conversion device 120, 220, 320 and 420 included therein to detect the state of the DC power and the driving power.

Each of the plurality of power panels 100, 200, 300 and 400 may receive power from any one of the at least one power supply source 10 to convert the power into the DC power.

In other words, each of the plurality of power panels 100, 200, 300 and 400 may be selectively supplied with power from any one of the at least one power supply source 10.

Each of the plurality of power panels 100, 200, 300 and 400 may receive power from any one of the at least one power supply source 10 according to a preset supply criterion to convert the power into the DC power.

The supply criterion may be a criterion for priority of power supply of the at least one power supply source 10.

The plurality of power panels 100, 200, 300 and 400 may select any one of the at least one first power conversion device 110, 210, 310 and 410 according to the state of the at least one power supply source 10 to transfer the DC power to the second power conversion device 120, 220, 320 and 420 through the selected conversion device.

Each of the plurality of power panels 100, 200, 300 and 400 may transfer the DC power to the second power conversion device 120, 220, 320 and 420 through one conversion device selected according to the state of the at least one power supply source 10.

When an abnormality occurs in at least one of a conversion device that is transferring the DC power to the second power conversion device 120, 220, 320 and 420 that converts the driving power and a power supply source corresponding to the conversion device, the plurality of power panels 100, 200, 300 and 400 may transfer the DC power to the second power conversion device 120, 220, 320 and 420 through a conversion device other than the conversion device.

In other words, when an abnormality occurs in at least one of a conversion device that is transferring the DC power and a power supply source corresponding to the conversion device, each of the plurality of power panels 100, 200, 300 and 400 may switch it to a conversion device other than the conversion device to transfer the DC power to the second power conversion device 120, 220, 320 and 420 through the switched conversion device.

When an abnormality occurs in at least one of a conversion device that is transferring the DC power and a power supply source corresponding to the conversion device, the plurality of power panels 100, 200, 300 and 400 may switch the power supply source that is supplying power and the conversion device to allow a conversion device other than the conversion device to transfer the DC power to the second power conversion device 120, 220, 320 and 420.

When the power supply of at least one of the plurality of power panels 100, 200, 300 and 400 is interrupted, the plurality of circuit breakers 130, 230, 330 and 430 may close a circuit breaker disposed between the power panel in which the power supply is interrupted and a power panel adjacent to the interrupted power panel to connect the interrupted power panel and the adjacent power panel, thereby allowing the DC power to be supplied from the adjacent power panel to the interrupted power panel.

In this case, the interrupted power panel may be supplied with the DC power from a conversion device connected to the battery power source (B) until the power supply is interrupted, and the DC power conducted from the adjacent power panel is supplied.

The foregoing system 1000 may further include a control device 600 that monitors the state of at least one of the plurality of power panels 100, 200, 300 and 400 and the plurality of circuit breakers 130 to control at least one of the plurality of power panels 100, 200, 300 and 400 and the plurality of circuit breakers 130 according to the monitoring result.

In other words, the plurality of power panels 100, 200, 300 and 400 may be controlled by the control device 600.

Each of the plurality of power panels 100, 200, 300 and 400 may communicate with the control device 600 to operate according to a result of communication with the control device 600.

For instance, each of the plurality of power panels 100, 200, 300 and 400 may receive a control command from the control device 600 to operate according to the control command, or to transfer state information to the control device 600.

Each of the plurality of power panels 100, 200, 300 and 400 may request the the opening and closing control of each of the first to fourth circuit breakers 130a to 130d to the control device 600 according to a result of controlling and monitoring the operation of the at least one first power conversion device 110, 210, 310 and 410 and the second power conversion device 120, 220, 320 and 420 included therein.

Each of the plurality of power panels 100, 200, 300 and 400 may transfer a result of controlling and monitoring the operation of the at least one first power conversion device 110, 210, 310 and 410 and the second power conversion device 120, 220, 320 and 420 included therein to the control device 600.

Each of the plurality of power panels 100, 200, 300 and 400 may control and monitor the operation of the at least one first power conversion device 110, 210, 310 and 410 and the second power conversion device 120, 220, 320 and 420 included therein to transfer a result of detecting the state of the DC power and the driving power to the control device 600.

Here, each of the plurality of power panels 100, 200, 300 and 400 may further include a control unit 140, 240, 340 and 440 that controls the at least one first power conversion device 110, 210, 310 and 410 and the second power conversion device 120, 220, 320 and 420, and monitors an abnormal state of at least one of the at least one power supply source 10, the at least one first power conversion device 110, the DC power, the driving power, and the load 20.

Here, each of the plurality of power panels 100, 200, 300 and 400 may further include a control unit 140, 240, 340 and 440 that controls the at least one first power conversion device 110, 210, 310 and 410 and the second power conversion device 120, 220, 320, and 420, and monitors an abnormal state of at least one of the at least one power supply source 10, the at least one first power conversion device 110, the DC power, the driving power, and the load 20.

The control unit 140, 240, 340 and 440 may be a central control device of each of the plurality of power panels 100, 200, 300 and 400.

The control unit 140, 240, 340 and 440 may include a plurality of control elements for controlling the plurality of power panels 100, 200, 300 and 400.

The control unit 140, 240, 340, and 440 may further include a plurality of electronic devices for performing a function of the plurality of power panels 100, 200, 300 and 400.

For instance, the control unit 140, 240, 340, and 440 may include at least one of a storage element that stores software/applications/programs for performing and controlling a function of the plurality of power panels 100, 200, 300 and 400, a dedicated control element including the storage element, a communication element, a display element, and an input element.

In other words, the control unit 140, 240, 340 and 440 may be controlled by the control device 600.

The control unit 140, 240, 340 and 440 may include a programmable logic controller (PLC) that controls the at least one first power conversion device 110, 210, 310 and 410, and the second power conversion device 120, 220, 320 and 420.

The control unit 140, 240, 340 and 440 may monitor the state of the at least one first power conversion device 110, 210, 310 and 410, and the second power conversion device 120, 220, 320 and 420, and control the operation of the at least one first power conversion device 110, 210, 310 and 410, and the second power conversion device 120, 220, 320 and 420 based on a result of monitoring.

The control unit 140, 240, 340 and 440 may also control the operation of the at least one first power conversion device 110, 210, 310 and 410, and the second power conversion device 120, 220, 320 and 420 based on the state of the at least one power supply source 10 and the load 20.

The control unit 140, 240, 340 and 440 may control the operation of each of the at least one first power conversion device 110, 210, 310 and 410 to control the conversion and supply of the DC power.

The control unit 140, 240, 340 and 440 may also control the opening and closing of each opening and closing element included in the at least one first power conversion device 110, 210, 310 and 410.

The control unit 140, 240, 340, and 440 may control the operation of each of the second power conversion devices 120, 220, 320, and 420 to control the conversion and supply of the driving power.

The control unit 140, 240, 340 and 440 may also control the opening and closing of each opening and closing element included in the second power conversion device 120, 220, 320 and 420.

The control unit 140, 240, 340 and 440 may also perform communication with at least one of an external communication device and the control device 600 to control the operation of the at least one first power conversion device 110, 210, 310 and 410, and the second power conversion device 120, 220, 320 and 420 according to a result of performing the communication.

For instance, a control command for the operation control of the at least one first power conversion device 110, 210, 310 and 410, and the second power conversion device 120, 220, 320 and 420 may be received from the control device 600 to control the operation of the at least one first power conversion device 110, 210, 310 and 410, and the second power conversion device 120, 220, 320 and 420 according to the control command.

The control unit 140, 240, 340 and 440 may receive power from any one of the at least one power supply source 10 to control the conversion of the power into the DC power.

In other words, the control unit 140, 240, 340 and 440 may control to selectively receive power from any one of the at least one power supply source 10.

The control unit 140, 240, 340 and 440 may receive power from any one of the at least one power supply source 10 according to a preset supply criterion to control the conversion of the power into the DC power.

The supply criterion may be a criterion for priority of power supply of the at least one power supply source 10.

For instance, the priority may be set in the order of the first AC power source 10#1, the second AC power source 10#3, and the battery power source 10#2.

When the supply criterion is as described above, the control unit 140, 240, 340 and 440 may control the supply of power in the order of the first AC power source 10#1, the second AC power source 10#3, and the battery power source 10#2.

When power is supplied from the first AC power source 10#1, the control unit 140, 240, 340 and 440 may control the operation of the first conversion device 110#1, 210#1, 310#1 and 410#1 connected to the first AC power source 10#1.

In this case, the control unit 140, 240, 340 and 440 may close the opening and closing element of the first conversion device 110#1, 210#1, 310#1 and 410#1, and open the opening and closing elements of the second conversion device 110#2, 210#2, 310#2 and 410#2 and the third conversion device 110#3, 210#3, 310#3 and 410#3 to connect the first conversion device 110#1, 210#1, 310#1 and 410#1, and disconnect the second conversion device 110#2, 210#2, 310#2 and 410#2 and the third conversion device 110#3, 210#3, 310#3 and 410#3.

When power is supplied from the second AC power source 10#3, the control unit 140, 240, 340 and 440 may control the operation of the third conversion device 110#3, 210#3, 310#3 and 410#3 connected to the second AC power source 10#3.

In this case, the control unit 140, 240, 340 and 440 may close the opening and closing element of the third conversion device 110#3, 210#3, 310#3 and 410#3, and open the opening and closing elements of the first conversion device 110#1, 210#1, 310#1 and 410#1, and the second conversion device 110#2, 210#2, 310#2 and 410#2 to connect the third conversion device 110#3, 210#3, 310#3 and 410#3, and disconnect the first conversion device 110#1, 210#1, 310#1 and 410#1 and the second conversion device 110#2, 210#2, 310#2 and 410#2.

When power is supplied from the battery power source 10#2, the control unit 140, 240, 340 and 440 may control the operation of the second conversion device 110#2, 210#2, 310#2 and 410#2 connected to the battery power source 10#2.

In this case, the control unit 140, 240, 340 and 440 may close the opening and closing element of the second conversion device 110#2, 210#2, 310#2 and 410#2, and open the opening and closing elements of the first conversion device 110#1, 210#1, 310#1 and 410#1, and the third conversion device 110#3, 210#3, 310#3, and 410#3 to connect only the second conversion device 110#2, 210#2, 310#2, and 410#2, and disconnect the first conversion device 110#1, 210#1, 310#1 and 410#1, and the third conversion device 110#3, 210#3, 310#3, and 410#3.

The control unit 140, 240, 340 and 440 may select any one of the at least one first power conversion device 110, 210, 310 and 410 according to the state of the at least one power supply source 10 to allow the selected conversion device to transfer the DC power to the second power conversion device 120, 220, 320 and 420.

In other words, the control unit 140, 240, 340 and 440 may convert the DC power through a conversion device selected from the at least one first power conversion device 110, 210, 310 and 410 to transfer the converted DC power to the second power conversion device 120.

For instance, when an abnormality occurs in the first AC power source 10#1 and the second AC power source 10#3 among the at least one power supply source 10, the second conversion device 110#2, 210#2, 310#2 and 410#2 connected to the battery power source 10#2 may be selected to control the second conversion device 110#2, 210#2, 310#2 and 410#2 to receive power from the battery power source 10#2 and convert it into the DC power, and transfer the DC power to each of the second power conversion device 120, 220, 320 and 420.

When an abnormality occurs in at least one of the conversion device 110, 210, 310 and 410 that is transferring the DC power to the second power conversion device 120, 220, 320 and 420 and the power supply source 10 corresponding to the conversion device 110, 210, 310 and 410, the control unit 140, 240, 340 and 440 may control the conversion device 110, 210, 310 and 410 other than the conversion device 110, 210, 310 and 410 to transfer the DC power to the second power conversion device 120, 220, 320 and 420.

When an abnormality occurs in at least one of conversion device 110, 210, 310 and 410 that is transferring the DC power to the second power conversion device 120, 220, 320 and 420 and the power supply source 10 corresponding to the conversion device 110, 210, 310 and 410, the control unit 140, 240, 340 and 440 may switch the power supply source 10 that is supplying power and the conversion device 110, 210, 310 and 410 to transfer the DC power to allow the conversion device 110, 210, 310 and 410 other than the conversion device 110, 210, 310 and 410 to transfer the DC power to the second power conversion device 120, 220, 320 and 420.

For example, when the first conversion device 110#1, 210#1, 310#1 and 410#1 fails or when a shutdown occurs in the first AC power source 10#1 while receiving power from the first AC power source 10#1 to convert the power into the DC power through the first conversion device 110#1, 210#1, 310#1 and 410#1, the first AC power source 10#1 that is supplying power may be switched to the second AC power source 10#3, and the first conversion device 110#1, 210#1, 310#1 and 410#1 may be switched to the third conversion device 110#3, 210#3, 310#3, and 410#3 to receive power from the second AC power source 10#3 such that the third conversion device 110#3, 210#3, 310#3, and 410#3 converts the DC power to transfer the DC power to the second power conversion device 120, 220, 320 and 420.

In this way, the control unit 140, 240, 340 and 440 that controls the at least one first power conversion device 110, 210, 310 and 410 and the second power conversion device 120, 220, 320 and 420 may request the reception and supply of the DC power to the control device 600 according to the state of the DC power or the driving power.

For example, when the magnitude of the driving power is less than the required magnitude of the load 20, or when the DC power is insufficient, it may be requested to the control device 600 to close the plurality of circuit breakers 130 so as to receive the DC power from the supply panel 100, 200, 300 and 400.

Alternatively, when the magnitude of the driving power is greater than the required magnitude of the load 20, or when the DC power is sufficient, it may be requested to the control device 600 to close the plurality of circuit breakers 130 to supply the DC power to the other power panel 100, 200, 300 or 400.

In the opposite case, when a fault current flows to the power end (O1 to O4) due to a failure occurring in the at least one first power conversion device 110, 210, 310 and 410 or the second power conversion device 120, 220, 320 and 420, or the fault current flows to the power end (O1 to O4) due to an abnormality occurring in the at least one power supply source 10 or the load 20, it may be requested to the control device 600 to open the plurality of circuit breakers 130 so as to prevent the fault current being supplied to the other power panel 100, 200, 300 or 400.

When an abnormality occurs in the at least one power supply source 10, the control unit 140, 240, 340 and 440 may close the plurality of circuit breakers 130 to request control to the control device 600 so as to receive the DC power from the other power panel 100, 200, 300 or 400 connected to the power end (O1 to O4).

When an abnormality occurs in the other power panel 100, 200, 300 or 400 connected to the power end (O1 to O4), the control unit 140, 240, 340 and 440 may close the plurality of circuit breakers 130 to request control to the control device 600 so as to supply DC power to the other power panel 100, 200, 300 or 400.

When an abnormality occurs in the other power supply unit 100, 200, 300 or 400 connected to the power ends (O1 to O4), the control unit 140, 240, 340 and 440 may control power to be further supplied from any one of the at least one power supply source 10, and close the plurality of circuit breakers 130 to request control to the control device 600 to supply the DC power converted from the supply source 10 controlled to further supply power and converted by the conversion device 110, 210, 310 and 410 corresponding thereto to be supplied to the other power panel 100, 200, 300 or 400, through the power ends (O1 to O4).

The control device 600 may control the operation of the plurality of circuit breakers 130 to control the reception and supply of the DC power.

For instance, the plurality of circuit breakers 130 may be closed to control the reception of the DC power between the plurality of power panels 200, 200, 300 and 400, or the supply of the DC power.

The control device 600 may communicate with each of the plurality of power panels 100, 200, 300 and 400 to control each of the plurality of power panels 100, 200, 300 and 400 based on state information received from each of the plurality of power panels 100, 200, 300 and 400.

For instance, according to the state information of the DC power and the driving power received from each of the plurality of power panels 100, 200, 300 and 400, the conversion and supply of the DC power of each of the plurality of power panels 100, 200, 300 and 400, and the conversion and supply of the driving power of each of the plurality of power panels 100, 200, 300 and 400 may be controlled.

The control device 600 may communicate with each of the plurality of power panels 100, 200, 300 and 400 to convert and supply the driving power to each of the plurality of power panels 100, 200, 300 and 400, or control the plurality of circuit breakers 130 based on the state information received from each of the plurality of power panels 100, 200, 300 and 400.

The control device 600 may also detect the state of the at least one power supply source 10 and receive information on the state of the at least one power supply source 10 and the load 20 from an external communication element to convert and supply the driving power of each of the plurality of power panels 100, 200, 300 and 400 or control the plurality of circuit breakers 130 based on the state of the at least one power supply source 10 and the load 20.

In this case, the control device 600 may transfer a control command for the conversion and supply of the driving power of each of the plurality of power panels 100, 200, 300 and 400, or the control of the plurality of circuit breakers 130 to each of the plurality of power panels 100, 200, 300 and 400, or each of the plurality of circuit breakers 130 to perform control according to the control command or the opening and closing control of each of the plurality of the plurality of circuit breakers 130 through the control unit 140, 240, 340 and 440 included in each of the plurality of power panels 100, 200, 300 and 400.

For example, when an abnormality occurs in the entire system power source (G) that is supplying power to the plurality of power panels 100, 200, 300 and 400, in order to cut off power supply from the system power source (G) and switch to another supply source, a control command for opening the plurality of circuit breakers 130, and receiving power from a power source other than the system power source (G) to convert and supply the DC power may be transferred to the control unit 140, 240, 340 and 440 included in each of the plurality of power panels 100, 200, 300 and 400, thereby opening each of the plurality of circuit breakers 130, and receiving power from the bypass power source (P) or the battery power source (B) to convert and supply the DC power.

The control device 600 may control the opening and closing of the plurality of circuit breakers 130 to allow the plurality of power panels 100, 200, 300 and 400 to receive the DC power.

When an abnormality occurs in at least one of the plurality of power panels 100, 200, 300 and 400, the control device 600 may close the circuit breakers 130 on either one of electric circuits connected to the abnormality occurred power panel and a power panel adjacent to the abnormality occurred power panel to allow the abnormality occurred power panel to receive the DC power from the adjacent power panel.

In other words, when an abnormality occurs in at least one of the plurality of power panels 100, 200, 300 and 400, the control device 600 may close any one of the circuit breakers 130 connected to the abnormality occurred power panel to allow the abnormality occurred power panel to receive the DC power from a neighboring power panel.

For example, when a failure occurs in the conversion device 110 of the first power panel 100 among the plurality of power panels 100, 200, 300 and 400, in order to supply DC power converted by any one conversion device 210 or 310 of the second power panel 200 or the third power panel 300 to the second power conversion device 120 of the first power panel 100, a control command for closing the first circuit breaker 130a on an electric circuit connected to the first power panel 100 and the third power panel 300 or the second circuit breaker 130b on an electric circuit connected to the first power panel 100 and the second power panel 200, and cutting off the at least one first power conversion device 110 of the first power panel 100, and supplying the DC power converted by any one of the at least one first power conversion device 210 or 310 of the second power panel 200 or the third power panel 300 to the second power conversion device 120 of the first power panel 100 may be transferred to each of the first power panel 100 and the second power panel 200 or the third power panel 300, the first circuit breaker 130a or the second circuit breaker 130b, thereby closing the first circuit breaker 130a or the second circuit breaker 130b, and allowing either one of the at least one first power conversion device 210 or 310 of the second power panel 200 or the third power panel 300 to supply the DC power to the second power conversion device 120 of the first power panel 100.

In other words, each of the plurality of power panels 100, 200, 300 and 400 may supply the DC power to the load 20 of the abnormality occurred power panel when an abnormality occurs in a neighboring power panel.

Here, when the DC power is supplied to the abnormality occurred power panel, the plurality of power panels 100, 200, 300 and 400 may select any one of the at least one first power conversion device 110, 210, 320 and 410 that converts the DC power according to the state of the at least one power supply source 10 to transfer the DC power to the abnormality occurred power panel through the selected converter.

In other words, when the DC power is supplied to the abnormality occurred power panel, the plurality of power panels 100, 200, 300 and 400 may supply the DC power to the abnormality occurred power panel through the selected one converter according to the state of the at least one power supply source 10.

For instance, when a rating of the system power source (G) and the bypass power source (P) among the at least one power supply source 10 that is supplying power to the second power panel 200 is lower than a reference rating while the second power panel 200 supplies the DC power to the first power panel 100, the second conversion device 210#2 corresponding to the battery power source (B) may be selected to supply the DC power through the battery power source (B) to convert power received from the battery power source (B) into the DC power through the selected second conversion device 210#2 and transfer the converted DC power to the first power panel 100.

When an abnormality occurs in at least one of the plurality of power panels 100, 200, 300 and 400, the control device 600 may close all the circuit breakers 130 on electric circuits connected to a plurality of power panels adjacent to the abnormality occurred power panel to allow the abnormality occurred power panel to receive the DC power from all the adjacent power panels.

In other words, when an abnormality occurs in at least one of the plurality of power panels 100, 200, 300 and 400, the control device 600 may close all the circuit breakers 130 connected to the abnormality occurred power panel to allow the abnormality occurred power panel to receive the DC power from all the neighboring power panels.

For instance, when an abnormality occurs in the first power panel 100, the second circuit breaker 130b that controls a connection to the second power panel 200 adjacent to the first power panel 100 and the first circuit breaker 130a that controls a connection to the third power panel 300 may be closed to allow the first power panel 100 to receive the DC power from the second power panel 200 adjacent to the first power panel 100 and the third power panel 300.

When there are a plurality of the abnormality occurred power panels, the control device 600 may close the plurality of circuit breakers 130 that control a connection to a power panel most adjacent to each of the abnormality occurred power panels to control each of the abnormality occurred power panel to receive the DC power from each of the power panels adjacent thereto.

In other words, there are a plurality of the abnormality occurred power panels, the control device 600 may control each of a plurality of power panels adjacent to each of the abnormality occurred power panels to supply the DC power to each of the abnormality occurred power panels.

For instance, when a failure occurs in the first power panel 100 and the second power panel 200, the first circuit breaker 130a that controls a connection between the first power panel 100 and the third power panel 300 and the fourth circuit breaker 130d that controls a connection between the second power panel 200 and the fourth power panel 400 may be closed to allow the first power panel 100 to receive the DC power from the third power panel 300, and allow the second power panel 200 to receive the DC power from the fourth power panel 400.

As described above, when an abnormality occurs in one or more of the plurality of power panels 100, 200, 300 and 400, the circuit breaker 130 that controls a connection to a power panel adjacent to the abnormality occurred power panel may be closed to control the abnormality occurred power panel to receive the DC power from the neighboring power panel, thereby allowing each of the plurality of power panels 100, 200, 300 and 400 to perform a UPS function.

Accordingly, in the system 1000, even when an unexpected abnormality occurs in the at least one power supply source 10, the plurality of power panels 100, 200, 300 and 400, and the load 20, the supply of the driving power to the load 20 may be continuously maintained, thereby maintaining the operation of the load 20 with no interruption, performing an appropriate and active power supply response for an abnormality occurrence, and stably performing the operation of the load 20 and the control of the system 1000 regardless of the type and extent of the abnormality occurrence.

An example of the operation of the system 1000 as described above may be performed as illustrated in FIGS. 13 to 16.

The example of the operation as illustrated in FIGS. 13 to 16 is an example of an operation when the system 1000 includes four power panels 100, 200, 300 and 400, and the system 1000 may include less than five, or five or more of the plurality of power panels 100, 200, 300 and 400.

A preferred embodiment of the system 1000 may include four power panels 100, 200, 300 and 400 as illustrated in FIGS. 13 to 16, and hereinafter, a case where the number of the plurality of power panels 100, 200, 300 and 400 are four, respectively, illustrated in FIGS. 13 to 16 will be described as an example.

FIG. 13 is a case in which each of the plurality of power panels 100, 200, 300 and 400 receives power from the system power source (G) among the at least one power supply source 10, and in this case, power supply from the bypass power source (P) and the battery power source (B) may be cut off, and power may be supplied through the system power source (G) and converted in the order of the DC power and the driving power to be supplied to each of the loads 20.

The example of operation as illustrated in FIG. 13 is a case of a typical operation in which power is supplied for operation from the system power source (G), and a normal operation of the system 1000 may be performed in this manner.

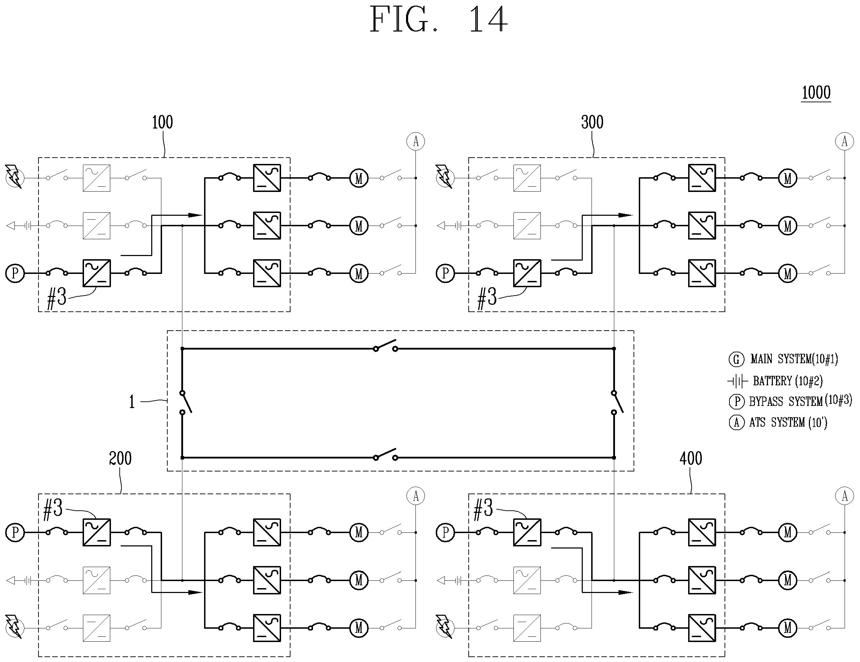

FIG. 14 is a case in which each of the plurality of power panels 100, 200, 300 and 400 receives power from the bypass power source (P) among the at least one power supply source 10, and a case in which an abnormality occurs in the system power source (G) may correspond thereto, and in this case, power supply from the system power source (G) and the battery power source (B) may be cut off, and power may be supplied through the bypass power source (P) and converted in the order of the DC power and the driving power to be supplied to each of the loads 20.

The example of operation as illustrated in FIG. 14 is a case of a special operation in which power is supplied for operation from the bypass power source (P), and the special operation of the system 1000 may be performed in this manner.

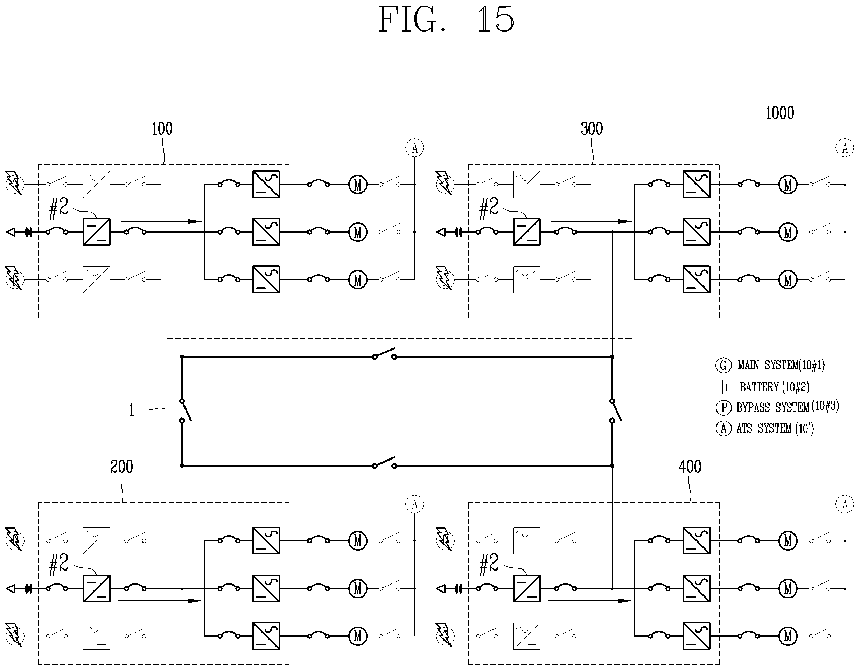

FIG. 15 is a case in which each of the plurality of power panels 100, 200, 300 and 400 receives power from the battery power source (B) among the at least one power supply source 10, and a case in which an abnormality occurs in the system power source (G) and the bypass power supply (P), and in this case, power supply from the system power source (G) and the bypass power source (P) may be cut off, and power may be supplied through the battery power source (B) and converted in the order of the DC power and the driving power to be supplied to each of the loads 20.

The example of the operation as illustrated in FIG. 15 is a case of a power outage operation in which power is supplied from the battery power source (B), and the power outage operation of the system 1000 may be performed in this manner.

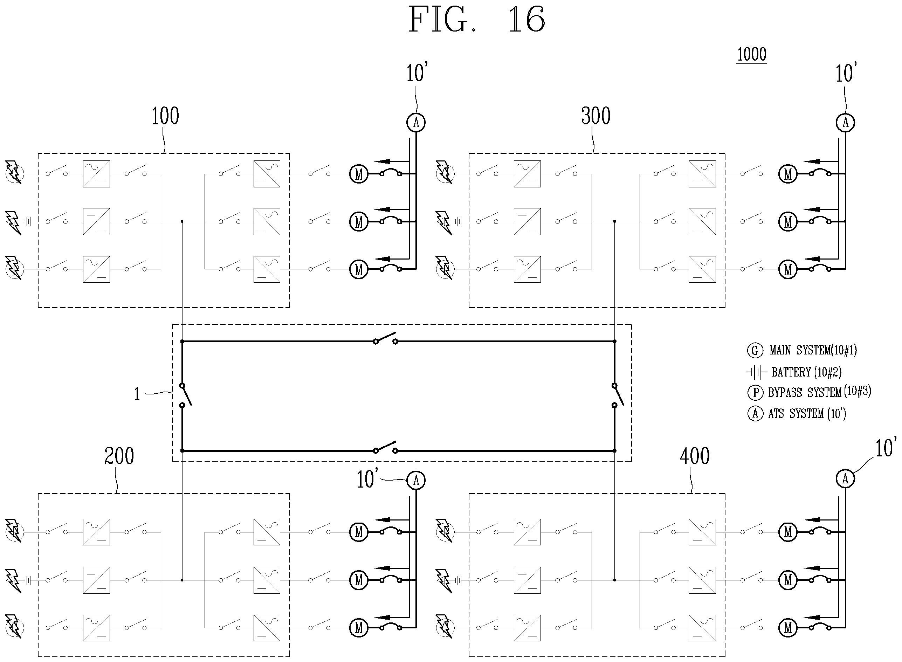

FIG. 16 is a case in which each of the plurality of power panels 100, 200, 300 and 400 receives power from the emergency power source (A) among the at least one power supply source 10, and a case in which an abnormality occurs in the system power source (G), the bypass power source (P) and the battery supply (B) may correspond thereto, and in this case, power supply from the system power source (G), the bypass power source (P) and the battery power source (B) may be cut off, and the emergency power source (A) may directly supply the driving power to each of the loads 20.

The example of the operation as illustrated in FIG. 16 is a case of emergency operation in which power is supplied from the emergency power source (A), and the emergency operation of the system 1000 may be performed in this manner.

As described above, in the system 1000, each of the plurality of power panels 100, 200, 300 and 400 may be receive power from the same power supply source for operation, or each of the plurality of power panels 100, 200, 300 and 400 may selectively receive power from any one of the at least one power supply source 10 for operation.

For instance, the first and second power panels 100 and 200 may be receive power from the system power source (G) for operation, and the third power panel 300 and the supply panel 400 may be receive power from the battery power source (B) for operation.

Furthermore, each of the plurality of power panels 100, 200, 300 and 400 may receive power from at least one power supply source 10 for operation.

For instance, when an abnormality occurs in the first power panel 100 and the DC power is supplied from the second power panel 200 to the first power panel 100, the second power panel 200 may convert power supplied from the system power source (G) into the DC power through the second-1 conversion device 210#1 and transfer the DC power to each of the second power conversion device 220, and power may be further supplied from the bypass power source (P) to convert the power into the DC power through a second-3 conversion device 210#3, and the DC power converted by the second-3 conversion device 210#3 may be transferred to each of the power conversion device 120 of the power panel 100.

In the case of this example, the second circuit breaker 130b connected to the first power panel 100 and the second power panel 200 may be closed to connect the first power panel 100 and the second power panel 200 to each other and supply the DC power from the second power panel 200 to the first power panel 100.

As described above, each of the plurality of power panels 100, 200, 300 and 400 may receive power from at least one power supply source 10 for operation, thereby performing power supply between the plurality of power panels 100, 200, 300 and 400, that is, a UPS function between the plurality of power panels 100, 200, 300 and 400.

The embodiments of the power supply system according to the present disclosure as described above may be applicable to a power module that supplies and uses DC power, a power supply system, and a method of operating the power supply system. In particular, it may be usefully applied to a DC UPS module and a power supply system having the same, and may also be applied and implemented to a motor control panel, a motor control system, a motor operation system, etc. that control a plurality of motor loads.

Although a specific embodiment according to the present disclosure has been described so far, various modifications may be made thereto without departing from the scope of the present disclosure. Therefore, the scope of the present disclosure should not be limited to the described embodiments and should be defined by the claims to be described later as well as the claims and equivalents thereto.

Although the present disclosure has been described with respect to specific embodiments and drawings, the present invention is not limited to those embodiments, and it will be apparent to those skilled in the art that various changes and modifications can be made from the description disclosed herein. Accordingly, the concept of the present disclosure should be construed in accordance with the appended claims, and all the same and equivalent changes will fall into the scope of the present invention.

## Claims

1. A power supply system, comprising:
a plurality of power panels that convert power supplied from at least one power source into DC power, and convert the converted DC power into driving power of a load, and supply the driving power to the load;
a supply panel that converts power supplied from at least one power supply source into DC power to supply the converted DC power to the plurality of power panels when connected to the plurality of power panels; and
a plurality of circuit breakers disposed between a power end of each of the plurality of power panels and the supply panel,
wherein the plurality of circuit breakers are opened and closed differently according to the power supply state of at least one of the plurality of power panels and the supply panel to connect or disconnect the DC power between the plurality of power panels and the supply panel.

2. The power supply system of claim 1, wherein the at least one power supply source comprises:
a first AC power source and a second AC power source that supply AC power; and
a battery power source in which DC power is stored to supply the stored power to the plurality of power panels while the power supply is switched and restored when the power supply of the first AC power source and the second AC power source is interrupted.

3. The power supply system of claim 2, wherein after the power supply is interrupted, the battery power source supplies the stored power to the plurality of power panels with no interruption until the power supply is switched and restored.

4. The power supply system of claim 2, wherein the at least one power supply source further comprises:
an emergency power source that supplies emergency power to the load when the power supply of the first AC power source, the second AC power source, and the battery power source is interrupted.

5. The power supply system of claim 2, wherein each of the plurality of power panels comprises:
at least one first power conversion device that converts power supplied from the at least one power supply source into the DC power; and
a second power conversion device that converts the DC power supplied from the at least one first power conversion device into the driving power to supply the driving power to the load.

6. The power supply system of claim 5, wherein the plurality of power panels supply the DC power to the second power conversion device through any one of the at least one first power conversion device according to the state of the at least one power supply source.

7. The power supply system of claim 6, wherein when the power supply of a conversion device that supplies the DC power to the second power conversion device is interrupted, the plurality of power panels supply the DC power to the second power conversion device through a conversion device other than the conversion device.

8. The power supply system of claim 7, wherein the at least one first power conversion device supplies the DC power to the second power conversion device through a conversion device that receives power from the battery power source while the conversion device is switched to the other conversion device.

9. The power supply system of claim 2, wherein a power supply source that supplies power to the supply panel comprises:
at least the battery power source.

10. The power supply system of claim 9, wherein the supply panel comprises at least one first power conversion device that further receives power from the first AC power source and the second AC power source, and converts power received from each of the first AC power source and the second AC power source, and the battery power source into the DC power.

11. The power supply system of claim 10, wherein the supply panel further comprises:
a second power conversion device that converts the DC power received from the at least one first power conversion device into driving power to be supplied to a load connected to the supply panel so as to supply the driving power to the connected load.

12. The power supply system of claim 2, wherein the plurality of circuit breakers are closed when the DC power is connected between the plurality of power panels and the supply panel, and opened when the DC power is disconnected between the plurality of power panels.

13. The power supply system of claim 12, wherein in the plurality of circuit breakers, when the power supply of at least one of the plurality of power panels is interrupted, a circuit breaker connected to a power end of the power panel in which the power supply is interrupted is closed to connect the interrupted power panel and the supply panel so as to supply the DC power from the supply panel to the interrupted power panel.

14. The power supply system of claim 13, wherein a case where the power supply is interrupted is when the state of at least one of the at least one power supply source that supplies power to the plurality of power panels, the DC power of the plurality of power panels, the driving power, the at least one first power conversion device, and the load is changed to cause an abnormality in the supply of the driving power to the load.

15. The power supply system of claim 13, wherein a case where the power supply is interrupted is at least one of when the power supply of the first AC power source and the second AC power source is interrupted, when the operation of at least one first power conversion device supplied with power from the first AC power source and the second AC power source is interrupted, when the DC power is changed from its initial state, when the driving power is changed from its initial state, and when the driving state of the load is changed.

16. The power supply system of claim 13, wherein the interrupted power panel is supplied with the DC power from a conversion device connected to the battery power source until the power supply is interrupted, and the DC power conducted from the supply panel is supplied.

17. The power supply system of claim 1, wherein a plurality of supply panels are provided therein, and
a supply target power panel for supplying the DC power is predetermined for each of the plurality of supply panels among the plurality of power panels to supply the DC power to the predetermined supply target power panel.

18. The power supply system of claim 17, wherein for the supply target power panel, the plurality of power panels are divided into a plurality of groups, and predetermined for each of the plurality of supply panels for each of the divided groups, and
each of the plurality of supply panels supplies the DC power to the supply target power panels corresponding to the divided groups.

19. The power supply system of claim 1, the supply panel is provided at a position where each of the plurality of power panels is separated within a predetermined distance.

20. A power supply system, comprising:
a plurality of power panels that convert power supplied from at least one power supply source into DC power, and convert the DC power into driving power of a load, and supply the driving power to the load; and
a plurality of circuit breakers disposed at one side of each of the plurality of power panels to connect or disconnect power ends of two power panels between one side of each of the plurality of power panels and the other side of a power panel adjacent to the one side,
wherein in the plurality of circuit breakers, when power supply in at least one of the plurality of power panels is interrupted, at least one of circuit breakers connected to one side and the other side of a power panel in which the power supply is interrupted is closed to connect at least one of power ends of power panels connected to both sides of the interrupted power panel and a power end of the interrupted power panel.

21. The power supply system of claim 20, wherein the at least one power supply source comprises:
a first AC power source and a second AC power source that supply AC power; and
a battery power source in which DC power is stored to supply the stored power to the plurality of power panels while the power supply is switched and restored when the power supply of the first AC power source and the second AC power source is interrupted, and
wherein after the power supply is interrupted, the battery power source supplies the stored power to the plurality of power panels with no interruption until the power supply is switched and restored.

22. The power supply system of claim 21, wherein each of the plurality of power panels is connected to any two of the plurality of circuit breakers.

23. The power supply system of claim 22, wherein in the plurality of power panels, the plurality of circuit breakers are respectively disposed between power ends of two power panels adjacent to a power end of any one power panel.

24. The power supply system of claim 21, wherein each of the plurality of power panels comprises:
a first power end corresponding to one end of the power end and a second power end corresponding to the other end of the power end, and
wherein the plurality of circuit breakers are disposed between each of the two power panels to connect or disconnect a first power end of a power panel at one side and a second power end of a power panel at the other side.

25. The power supply system of claim 21, wherein the plurality of circuit breakers are provided with a number corresponding to the plurality of power panels.

26. The power supply system of claim 21, wherein in the plurality of circuit breakers, when the power supply of at least one of the plurality of power panels is interrupted, a circuit breaker disposed between a power panel in which the power supply is interrupted and a power panel adjacent to the interrupted power panel is closed to connect the interrupted power panel and the adjacent power panel so as to supply the DC power from the adjacent power panel to the interrupted power panel.

27. The power supply system of claim 26, wherein the interrupted power panel is supplied with the DC power from a conversion device connected to the battery power source until the power supply is interrupted, and the DC power conducted from the adjacent power panel is supplied.
